(19) Europäisches Patentamt
European Patent Office
Office européen des brevets

(11) **EP 4 130 788 A1**

(12) **EUROPEAN PATENT APPLICATION**
published in accordance with Art. 153(4) EPC

(43) Date of publication:
**08.02.2023 Bulletin 2023/06**

(21) Application number: **20932472.2**

(22) Date of filing: **24.04.2020**

(51) International Patent Classification (IPC):
**G01S 13/08** (1980.01)     **G01S 13/06** (1980.01)

(52) Cooperative Patent Classification (CPC):
**G01S 13/06; G01S 13/08**

(86) International application number:
**PCT/CN2020/086873**

(87) International publication number:
**WO 2021/212521 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129, (CN)**

(72) Inventors:
• **ZHU, Jiezuo
  Shenzhen, Guangdong 518129 (CN)**
• **YUAN, Shutian
  Shenzhen, Guangdong 518129 (CN)**
• **YE, Wei
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SIGNAL PROCESSING METHOD, APPARATUS, AND SYSTEM**

(57)     This application relates to a signal processing method, an apparatus, and a system, which may be applied to sensors such as a radar, and are applicable to the fields such as automated driving, intelligent driving, or intelligent transmission. A target apparatus receives a first transmit signal from a detection apparatus. The target apparatus generates a first echo signal, where the first echo signal is generated by modulating some of reflected signals of the first transmit signal, and a first Doppler shift exists between the first echo signal and the first transmit signal. The first echo signal is used to determine a distance between the detection apparatus and the target apparatus. Because a Doppler frequency of the first echo signal is different from a Doppler frequency of an echo signal from an environment, the detection apparatus can identify the first echo signal from the target apparatus based on the Doppler frequency, so that the detection apparatus can perform ranging on the target apparatus based on the first echo signal.

FIG. 6

## Description

### TECHNICAL FIELD

This application relates to the field of communications technologies, and in particular, to the field of short-range communication. This application provides a signal processing method, an apparatus, and a system. Embodiments of this application may be applied to internet of vehicles, for example, vehicle-to-everything (vehicle-to-everything, V2X) or vehicle-to-vehicle (vehicle-to-vehicle, V2V), or may be applied to the fields of automated driving, intelligent driving, intelligent connected vehicles, intelligent robots, unmanned transport vehicles, or the like.

### BACKGROUND

At present, a radar can be used to perform ranging on an object. The radar is a detection system that uses radio waves to determine a distance, an angle, or a speed of the object. The radar can be used in a device, for example, an airplane, a ship, a space vehicle, a guided missile, a robot, or a motor vehicle, and can also be used to detect weather formation, a landform, or the like. When used to perform ranging on a target object, the radar can transmit a radio wave, the radio wave is reflected back after reaching the target object, and the radar may determine a distance between the radar and the target object based on a reflected wave.

The radar may obtain information about the target object based on electromagnetic energy of the reflected wave. However, when the target object is in a large reflection background, electromagnetic energy reflected by the target object is far less than electromagnetic energy reflected by an environment. If the target object is in a stationary state, the radar may not be able to distinguish between a reflected wave from the target object and a reflected wave from the environment. As a result, the target object cannot be identified. For example, if the target object is a wall clock hanging on a wall, the large reflection background is a surface of the wall. A radio wave transmitted by the radar is reflected after reaching the wall clock, the radio wave is also reflected after reaching the surface of the wall, and the wall clock is very small relative to the surface of the wall in area. Therefore, electromagnetic energy reflected by the wall clock is far less than electromagnetic energy reflected by the surface of the wall. Then, after a reflected wave from the wall clock and a reflected wave from the surface of the wall reach the radar, the radar cannot distinguish between the two reflected waves, and may consider that the two reflected waves are a same reflected wave. As a result, the wall clock cannot be detected, and accordingly, ranging cannot be performed on the wall clock.

### SUMMARY

Embodiments of this application provide a signal processing method, an apparatus, and a system, to perform ranging on a target object. Even if the target object is in a stationary state or a low-speed moving state or electromagnetic energy reflected by an environment is relatively large, ranging can be accurately and efficiently completed by using the method provided in the embodiments of this application.

According to a first aspect, a first signal processing method is provided. The method includes: receiving a first transmit signal from a detection apparatus; and generating a first echo signal, where the first echo signal is generated by modulating some of reflected signals of the first transmit signal, and a first Doppler shift exists between the first echo signal and the first transmit signal; and the first echo signal is used to determine a distance between the detection apparatus and a target apparatus.

The method may be performed by the target apparatus. The target apparatus is, for example, a target object that can modulate the reflected signals, or the target apparatus may be, for example, a tag disposed on a target object.

In this embodiment of this application, the target apparatus may modulate some of the reflected signals of the first transmit signal, to obtain the first echo signal. The first Doppler shift exists between the first echo signal and the first transmit signal. In this way, after the detection apparatus receives the first echo signal, even if the detection apparatus further receives an echo signal from an environment, the detection apparatus can identify the first echo signal from the target apparatus because a second Doppler frequency corresponding to the first echo signal is different from a Doppler frequency of the echo signal from the environment. Therefore, the detection apparatus can identify the target apparatus, and can also perform ranging on the target apparatus based on the first echo signal. It can be learned that, by using a technical solution provided in this embodiment of this application, tasks such as identification and ranging can be completed even for a stationary target apparatus or a target apparatus that moves at a low speed in a large reflection background.

In an optional implementation, a difference between the second Doppler frequency corresponding to the first echo signal and the first Doppler shift is less than or equal to a first threshold, the first threshold is determined based on first information, the first information includes preset speed information, and the second Doppler frequency corresponds to the distance between the detection apparatus and the target apparatus.

If the target apparatus is in a stationary state, the first echo signal corresponds only to the first Doppler shift and does not correspond to another Doppler frequency. In this case, the detection apparatus may determine the distance between the detection apparatus and the target apparatus based on the first Doppler shift. However, the target apparatus may not be in the stationary state. For example, the target apparatus may be in a low-speed moving state. In this case, the first echo signal corresponds to a Doppler frequency generated due to modulation, and may also correspond to a Doppler frequency generated due to a movement of the target apparatus. In other words, for the target apparatus, a Doppler frequency of the first echo signal is a first Doppler frequency, but for the detection apparatus, the Doppler frequency of the first echo signal is the second Doppler frequency, and the second Doppler frequency reflects the first Doppler frequency and the Doppler frequency generated due to the movement of the target apparatus. In this case, the detection apparatus detects the first echo signal based on only the first Doppler shift, thereby failing to detect all to be detected. Therefore, optionally, to reduce a probability that the detection apparatus fails to detect all to be detected, the first threshold may be set, and the difference between the second Doppler frequency corresponding to the first echo signal and the first Doppler shift is enabled to be less than or equal to the first threshold. Therefore, the detection apparatus can determine the distance between the target apparatus and the detection apparatus based on the first Doppler shift and the first threshold. However, when the detection apparatus determines the distance between the target apparatus and the detection apparatus, the detection apparatus actually determines the distance based on the first Doppler shift, the first threshold, and the second Doppler frequency that corresponds to the first echo signal received by the detection apparatus. Therefore, it is considered that the second Doppler frequency corresponds to the distance between the detection apparatus and the target apparatus. Setting the first threshold may expand a detection range of the detection apparatus for the first echo signal, to avoid as much as possible failing to detect all to be detected, and improve a detection success rate.

Specifically, the preset speed information is, for example, a first speed range. For example, if the first threshold is determined based on the first speed range, the first threshold may be greater than or equal to a maximum value of a Doppler frequency corresponding to the first speed range, or the first threshold may be greater than or equal to a Doppler frequency corresponding to a second speed. The second speed is a maximum value included in the first speed range. Alternatively, the preset speed information of the target apparatus may be the second speed. In this case, a speed range may not be considered. For example, the first speed range is determined by the detection apparatus and the target apparatus through negotiation in advance, or is set and notified to the detection apparatus by a network device, or is preset by the detection apparatus. In addition, the preset speed information of the target apparatus may be preset actual speed information of the target apparatus, or may be preset relative speed information of the target apparatus relative to the detection apparatus.

In an optional implementation, a speed of the target apparatus is within the first speed range. Optionally, the first speed range is preset.

In this embodiment of this application, because the first Doppler shift is set, optionally, a movement speed of the target apparatus (herein, referring to an actual movement speed of the target apparatus, or a relative speed of the target apparatus relative to the detection apparatus, instead of a simulated movement speed) needs to meet a specific condition, so that the detection apparatus can detect the target apparatus. In view of this, for example, in this embodiment of this application, the movement speed of the target apparatus may be within the first speed range, and the first speed range is determined by, for example, the detection apparatus. The movement speed of the target apparatus may be the actual movement speed of the target apparatus, or the relative speed of the target apparatus relative to the detection apparatus. However, the first speed range may also be used to determine the first threshold. To be specific, in this embodiment of this application, the movement speed of the target apparatus may be specified, or the first threshold may be set based on the specified movement speed, so that the detection apparatus can detect an echo signal of the target apparatus, to reduce the probability of failing to detect all to be detected. The specified movement speed of the target apparatus may be the actual movement speed of the target apparatus, or the relative speed of the target apparatus relative to the detection apparatus. For example, if the detection apparatus needs to perform ranging on the target apparatus whose relative speed relative to the detection apparatus is less than or equal to F, the first speed range may be determined based on the speed F. For example, the first speed range is [0, the speed F]. In other words, the first speed range may be determined based on a detection purpose of the detection apparatus. Alternatively, the first speed range may be determined based on another factor. This is not specifically limited.

In an optional implementation, the generating a first echo signal includes:

changing impedance of an antenna of the target apparatus, to modulate amplitudes of some of the reflected signals of the first transmit signal; and
obtaining the first echo signal.

For example, the impedance of the antenna of the target apparatus has a plurality of values, which may be understood as that there are a plurality of tap positions and one switch. When the switch is connected to a different tap position, the impedance of the antenna of the target apparatus is different. However, the target apparatus may control the switch, to adjust the impedance of the antenna of the target apparatus. When the impedance of the antenna of the target apparatus is different, an amplitude of an echo signal is different. Therefore, the target apparatus may switch the impedance of the antenna of the target apparatus between at least two values, to implement an objective of changing the impedance of the antenna of the target apparatus. Accordingly, amplitudes of a first part of reflected signals are modulated to obtain the first echo signal. The target apparatus in this embodiment of this application modulates the first part of reflected signals. A modulation manner is, for example, the manner of changing the impedance of the antenna of the target apparatus described herein. Certainly, this is just one manner in which the target apparatus obtains the first echo signal. In addition to switching the impedance of the antenna of the target apparatus, the target apparatus may alternatively obtain the first echo signal in another modulation manner.

In an optional implementation, the first Doppler shift is determined based on a first speed, and the first speed is a movement speed of an object with a highest movement speed in an environment in which the target apparatus is located.

For example, the environment in which the target apparatus is located is a first area. In this case, the first speed is a speed of an object with a highest movement speed in the first area. The first area may be located within a detection range (or a coverage range) of the detection apparatus. For example, the first area may include the entire detection range or a part of the detection range of the detection apparatus. For example, if detection accuracy of the detection apparatus needs to be improved, a probability of failing to detect all to be detected needs to be reduced, or objects in a moving state are included in the entire detection range of the detection apparatus, the first area may include the entire detection range of the detection apparatus. For example, the detection apparatus may set the first speed based on a movement speed of an object with a highest movement speed in the entire detection range of the detection apparatus, and the first speed set in this way is accurate. Alternatively, if most of objects included in a first part of the detection range of the detection apparatus are in a stationary state, all of the detection range but the first part of the detection range of the detection apparatus may be considered when the first speed is determined. For example, the detection apparatus may set the first speed based on a movement speed of an object with a highest movement speed in all of the detection range but the first part of the detection range of the detection apparatus. The first speed set in this way is relatively accurate, and has little impact on the detection accuracy of the detection apparatus. In addition, an area that is considered when the first speed is set is reduced. This helps simplify a process of determining the first speed.

The detection range of the detection apparatus may be understood as follows: The detection apparatus sends a transmit signal, the transmit signal is reflected after reaching an object; if the signal reflected by the object can be received by the detection apparatus, the object is located within the detection range of the detection apparatus; if the signal reflected by the object cannot be received by the detection apparatus, the object is located outside the detection range of the detection apparatus.

Generally, a signal generated (or reflected) by an object with a higher speed corresponds to a higher Doppler frequency, and a signal generated (or reflected) by an object with a lower speed corresponds to a lower Doppler frequency. For example, the first Doppler shift in this embodiment of this application may be greater than a Doppler frequency corresponding to a signal generated (or reflected) by an object with the first speed. For example, the first Doppler shift is $f_m$. In an example in which the first Doppler shift is equal to the second Doppler frequency corresponding to the first echo signal, after receiving the first echo signal, the detection apparatus may input a difference frequency signal corresponding to the first echo signal into a range-Doppler spectrum, and detect whether there are corresponding signals at $+f_m$ and $-f_m$ in the range-Doppler spectrum. If there are corresponding signals at $+f_m$ and $-f_m$, a distance between $+f_m$ and $-f_m$ in the range-Doppler spectrum is the distance between the detection apparatus and the target apparatus. If the first Doppler shift is greater than the Doppler frequency corresponding to the signal generated (or reflected) by the object with the first speed, Doppler frequencies corresponding to all objects due to movement in the environment in which the target apparatus is located cannot reach the two frequencies, namely, $-f_m$ or $+f_m$ in the range-Doppler spectrum, and a probability that the detection apparatus mistakenly considers a Doppler frequency corresponding to another object as the second Doppler frequency corresponding to the first echo signal is reduced. In other words, a probability of a false detection can be reduced, and the detection success rate of the detection apparatus can be improved.

According to a second aspect, a second signal processing method is provided. The method includes: sending a first transmit signal; receiving a first echo signal from a target apparatus, where the first echo signal is generated by modulating some of reflected signals of the first transmit signal, and relative to the first transmit signal, the first echo signal corresponds to a second Doppler frequency; and determining a distance between a detection apparatus and the target apparatus based on the first echo signal.

The method may be performed by the detection apparatus. The detection apparatus is, for example, a communications device, or the detection apparatus may be a chip installed in a communications device. The communications device is, for example, a radar (or a radar apparatus), or the communications device may be another device. Alternatively, the detection apparatus may be a reader-writer or the like.

In an optional implementation, a difference between the second Doppler frequency and a first Doppler shift corresponding to the first echo signal is less than or equal to a first threshold, the first threshold corresponds to first information, and the first information includes preset speed information.

In an optional implementation, the determining a distance between a detection apparatus and the target apparatus based on the first echo signal includes:

determining a difference frequency signal corresponding to the first echo signal; and
determining the distance between the detection apparatus and the target apparatus based on the difference frequency signal.

The difference frequency signal corresponding to the first echo signal includes Doppler information (for example, a Doppler frequency) of the target apparatus, and includes information about the distance between the target apparatus and the detection apparatus. Therefore, the distance between the target apparatus and the detection apparatus can be determined by further processing the difference frequency signal. For example, after determining the difference frequency signal, the detection apparatus may determine a frequency of the difference frequency signal. The frequency of the difference frequency signal is the second Doppler frequency corresponding to the first echo signal. Therefore, the distance between the target apparatus and the detection apparatus can be determined based on the frequency of the difference frequency signal. If the detection apparatus further receives a second echo signal from an environment in which the target apparatus is located, the detection apparatus may also determine a difference frequency signal, for example, referred to as a first difference frequency signal, corresponding to the second echo signal. In addition, if the detection apparatus further receives an unmodulated reflected signal from the target apparatus, the detection apparatus may also determine a difference frequency signal, for example, referred to as a second difference frequency signal, corresponding to the unmodulated reflected signal. A frequency of the first difference frequency signal is usually the same as a frequency of the second difference frequency signal, but a frequency of the difference frequency signal corresponding to the first echo signal is different from the frequency of the first difference frequency signal or the frequency of the second difference frequency signal. Therefore, the detection apparatus can identify the first echo signal.

In an optional implementation, the determining the distance between the detection apparatus and the target apparatus based on the difference frequency signal includes:

inputting the difference frequency signal into a range-Doppler spectrum, where the range-Doppler spectrum is used to represent a relationship between a distance, a Doppler frequency, and signal energy; and
determining that a distance corresponding to a signal in a first frequency range in the range-Doppler spectrum is the distance between the detection apparatus and the target apparatus, where the first frequency range is determined based on the first Doppler shift and the first threshold.

In the range-Doppler spectrum, there is a correspondence between a distance and a Doppler frequency. The detection apparatus may determine whether there is a signal that meets an energy requirement in the first frequency range in the range-Doppler spectrum. If there is a signal that meets the energy requirement, a distance corresponding to the signal in the range-Doppler spectrum is the distance between the detection apparatus and the target apparatus. The first frequency range may be determined based on the first Doppler shift, or may be determined based on the first Doppler shift and the first threshold.

In an optional implementation, the first Doppler shift is determined based on a first speed, and the first speed is a movement speed of an object with a highest movement speed in an environment in which the target apparatus is located.

For technical effects brought by the second aspect or the implementations of the second aspect, refer to the descriptions of the technical effects brought by the first aspect or the corresponding implementations of the first aspect.

According to a third aspect, a target apparatus is provided. For example, the target apparatus is the target apparatus mentioned above. The target apparatus is configured to perform the method according to any one of the first aspect or the possible implementations. Specifically, the target apparatus may include modules configured to perform the method according to any one of the first aspect or the possible implementations. For example, the target apparatus includes a processing module and a transceiver module. For example, the target apparatus is a target object that can modulate a reflected signal, or is a function module, like a chip system or a tag, disposed on the target object.

The transceiver module is configured to receive a first transmit signal from a detection apparatus.

The processing module is configured to generate a first echo signal. The first echo signal is generated by modulating some of reflected signals of the first transmit signal, and a first Doppler shift exists between the first echo signal and the first transmit signal.

The first echo signal is used to determine a distance between the detection apparatus and the target apparatus.

In an optional implementation, a difference between a second Doppler frequency corresponding to the first echo signal and the first Doppler shift is less than or equal to a first threshold, the first threshold is determined based on first information, the first information includes preset speed information of the target apparatus, and the second Doppler frequency corresponds to the distance between the detection apparatus and the target apparatus. In an optional implementation, a speed of the target apparatus is within a first speed range. The first speed range is preset.

In an optional implementation, the processing module is configured to generate the first echo signal in the following manner: changing impedance of an antenna of the target apparatus, to modulate amplitudes of some of the reflected signals of the first transmit signal; and obtaining the first echo signal.

In an optional implementation, the first Doppler shift is determined based on a first speed, and the first speed is a movement speed of an object with a highest movement speed in an environment in which the target apparatus is located.

For technical effects brought by the third aspect or the implementations of the third aspect, refer to the descriptions of the technical effects brought by the first aspect or the corresponding implementations of the first aspect.

According to a fourth aspect, a detection apparatus is provided. For example, the detection apparatus is the detection apparatus mentioned above. The detection apparatus is configured to perform the method according to any one of the second aspect or the possible implementations. Specifically, the detection apparatus may include modules configured to perform the method according to any one of the second aspect or the possible implementations. For example, the detection apparatus includes a processing module and a transceiver module. For example, the detection apparatus is a communications device, or the detection apparatus may be a chip installed in a communications device. The communications device is, for example, a radar (or a radar apparatus), or the communications device may be another device. Alternatively, the detection apparatus may be a reader-writer or the like.

The transceiver module is configured to send a first transmit signal.

The transceiver module is further configured to receive a first echo signal from a target apparatus. The first echo signal is generated by modulating some of reflected signals of the first transmit signal; and relative to the first transmit signal, the first echo signal corresponds to a second Doppler frequency.

The processing module is configured to determine a distance between the detection apparatus and the target apparatus based on the first echo signal.

In an optional implementation, a difference between the second Doppler frequency and a first Doppler shift corresponding to the first echo signal is less than or equal to a first threshold, the first threshold corresponds to first information, and the first information includes preset speed information.

In an optional implementation, the processing module is configured to determine the distance between the detection apparatus and the target apparatus based on the first echo signal in the following manner:

determining a difference frequency signal corresponding to the first echo signal; and
determining the distance between the detection apparatus and the target apparatus based on the difference frequency signal.

In an optional implementation, the processing module is configured to determine the distance between the detection apparatus and the target apparatus based on the difference frequency signal in the following manner:

inputting the difference frequency signal into a range-Doppler spectrum, where the range-Doppler spectrum is used to represent a relationship between a distance, a Doppler frequency, and signal energy; and
determining that a distance corresponding to a signal in a first frequency range in the range-Doppler spectrum is the distance between the detection apparatus and the target apparatus, where the first frequency range is determined based on the first Doppler shift and the first threshold.

In an optional implementation, the first Doppler shift is determined based on a first speed, and the first speed is a movement speed of an object with a highest movement speed in an environment in which the target apparatus is located.

For technical effects brought by the fourth aspect or the implementations of the fourth aspect, refer to the descriptions of the technical effects brought by the second aspect or the corresponding implementations of the second aspect.

According to a fifth aspect, a target apparatus is provided. The target apparatus is, for example, the target apparatus mentioned above. The target apparatus includes at least one processor and a communications circuit (or referred to as an interface circuit). For example, the at least one processor may implement a function of the processing module in the first aspect, and the communications circuit may implement a function of the transceiver module in the first aspect. The communications circuit includes, for example, a processing circuit and an antenna. The at least one processor and the communications circuit are coupled to each other, to implement the method described in the first aspect or the possible implementations of the first aspect. For example, the target apparatus is a target object that can modulate a reflected signal, or is a function module, like a chip system or a tag, disposed on the target object.

If the target apparatus is the target object, the communications circuit is implemented by using, for example, a transceiver (or a transmitter and a receiver) in the target object. For example, the transceiver is implemented by using an antenna, a feeder, a codec, or the like in the target object. Alternatively, if the target apparatus is a chip disposed in the target object, the communications circuit is, for example, an input/output interface such as an input/output pin of the chip. The communications circuit is connected to a radio frequency transceiver component in a detection device, to implement information receiving and sending through the radio frequency transceiver component. Alternatively, if the target apparatus is the tag disposed on the target object, the communications circuit includes, for example, an antenna of the tag, and the antenna can reflect a signal from another device.

According to a sixth aspect, a detection apparatus is provided. The detection apparatus is, for example, the detection apparatus mentioned above. The detection apparatus includes at least one processor and a communications circuit (or referred to as an interface circuit). For example, the at least one processor may implement a function of the processing module in the second aspect, and the communications circuit may implement a function of the transceiver module in the second aspect. The communications circuit includes, for example, a processing circuit and an antenna. The at least one processor and the communications circuit are coupled to each other, to implement the method described in the second aspect or the possible implementations of the second aspect. For example, the detection apparatus is a communications device that can perform ranging on a target apparatus based on a received echo signal, or is a function module, like a chip system or a tag, disposed on the communications device. For example, the communications device is a radar (or a radar apparatus), or the communications device may be another device. Alternatively, the detection apparatus may be a reader-writer or the like.

If the detection apparatus is the communications device, the communications circuit is implemented by using, for example, a transceiver (or a transmitter and a receiver) in the communications device. For example, the transceiver is implemented by using an antenna, a feeder, a codec, or the like in the communications device. Alternatively, if the detection apparatus is a chip disposed in the communications device, the communications circuit is, for example, an input/output interface such as an input/output pin of the chip. The communications interface is connected to a radio frequency transceiver component in the communications device, to implement information receiving and sending through the radio frequency transceiver component.

According to a seventh aspect, a detection system is provided. The detection system includes the target apparatus according to the third aspect or the target apparatus according to the fifth aspect, and includes the detection apparatus according to the fourth aspect or the detection apparatus according to the sixth aspect.

According to an eighth aspect, a computer-readable storage medium is provided. The computer-readable storage medium is configured to store a computer program. When the computer program is run on a computer, the computer is enabled to perform the method according to any one of the first aspect or the possible implementations.

According to a ninth aspect, a computer-readable storage medium is provided. The computer-readable storage medium is configured to store a computer program. When the computer program is run on a computer, the computer is enabled to perform the method according to any one of the second aspect or the possible implementations.

According to a tenth aspect, a computer program product including instructions is provided. The computer program product is used to store a computer program. When the computer program is run on a computer, the computer is enabled to perform the method according to any one of the first aspect or the possible implementations.

According to an eleventh aspect, a computer program product including instructions is provided. The computer program product is used to store a computer program. When the computer program is run on a computer, the computer is enabled to perform the method according to any one of the second aspect or the possible implementations.

In the embodiments of this application, after the detection apparatus receives the first echo signal, even if the detection apparatus further receives an echo signal from an environment, the detection apparatus can identify, based on Doppler frequencies, the first echo signal from the target apparatus because the Doppler frequency of the first echo signal is different from the Doppler frequency of the echo signal from the environment, so that the detection apparatus can perform ranging on the target apparatus based on the first echo signal.

## BRIEF DESCRIPTION OF DRAWINGS

FIG. 1 is a schematic diagram of performing ranging on a tag by a reader-writer;
FIG. 2 is a schematic diagram of obtaining energy by using a radio frequency signal of an environment to perform communication;
FIG. 3 is a schematic diagram of performing ranging on a target object by a radar;
FIG. 4 is a schematic diagram of a working principle of a millimeter-wave radar;
FIG. 5 is a schematic diagram of an application scenario according to an embodiment of this application;
FIG. 6 is a flowchart of a signal processing method according to an embodiment of this application;

FIG. 7A is a schematic diagram of impedance of an antenna of a target apparatus according to an embodiment of this application;

FIG. 7B is a schematic diagram of a relationship between impedance of an antenna of a target apparatus and an echo signal according to an embodiment of this application;

FIG. 8 is a schematic diagram of a first transmit signal and a first echo signal according to an embodiment of this application;

FIG. 9 is a schematic diagram of a first echo signal corresponding to a new frequency component according to an embodiment of this application;

FIG. 10 is a schematic diagram of a range-Doppler spectrum according to an embodiment of this application;

FIG. 11 is a schematic diagram of a structure of a target apparatus according to an embodiment of this application;

FIG. 12 is a schematic diagram of a structure of a detection apparatus according to an embodiment of this application;

FIG. 13 is a schematic diagram of a structure of a detection apparatus according to an embodiment of this application;

FIG. 14 is a schematic diagram of a structure of a detection apparatus according to an embodiment of this application; and

FIG. 15 is a schematic diagram of a structure of a detection apparatus according to an embodiment of this application.

## DESCRIPTION OF EMBODIMENTS

To make the objectives, technical solutions and advantages of the embodiments of this application clearer, the following further describes the embodiments of this application in detail with reference to the accompanying drawings. The following describes some terms in the embodiments of this application to help a person skilled in the art have a better understanding.

(1) A detection apparatus is, for example, a radar (radar), or may be a chip disposed in a radar, or may be another apparatus configured to perform detection (for example, ranging).

(2) A radar may alternatively be referred to as a radar apparatus, a detector, a radar detection apparatus, a radar signal sending apparatus, or the like. A working principle of the radar is that the radar sends a signal (or referred to as a detection signal) and receives a reflected signal reflected by a target object to detect a corresponding target object. The signal sent by the radar may be a radar signal. Correspondingly, the received reflected signal reflected by the target object may also be a radar signal.

(3) A range-Doppler (range-Doppler, RD) spectrum represents a relationship between a distance and a Doppler frequency.

(4) A network device includes, for example, an access network (access network, AN) device like a base station (for example, an access point), and may be a device that communicates with a wireless terminal device over an air interface through one or more cells in an access network. Alternatively, for example, a network device in a vehicle-to-everything (vehicle-to-everything, V2X) technology is a road side unit (road side unit, RSU). The base station may be configured to mutually convert a received over-the-air frame and an IP packet, and serve as a router between the terminal device and a remaining part of the access network, where the remaining part of the access network may include an IP network. The RSU may be a fixed infrastructure entity supporting V2X applications, and may exchange a message with another entity supporting V2X applications. The network device may further coordinate attribute management of the air interface. For example, the network device may include an evolved NodeB (evolved Node B, NodeB or eNB or e-NodeB) in a long term evolution (long term evolution, LTE) system or a long term evolution-advanced (long term evolution-advanced, LTE-A) system, or may include a next generation nodeB (next generation nodeB, gNB) in the $5^{th}$ generation mobile communication technology (the $5^{th}$ generation, 5G) new radio (new radio, NR) system (also referred to as an NR system for short), or may include a centralized unit (centralized unit, CU) and a distributed unit (distributed unit, DU) in a cloud radio access network (cloud radio access network, Cloud RAN) system. This is not limited in the embodiments of this application.

The network device may further include a core network device. The core network device includes, for example, an access and mobility management function (access and mobility management function, AMF), a user plane function (user plane function, UPF), or the like.

Because the embodiments of this application mainly relate to an access network device, the network device in the following is an access network device unless otherwise specified. (5) "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, in the embodiments of this application, ordinal numbers such as "first" and "second" are used to distinguish between a plurality of objects, and are not intended to limit an order, a time sequence, priorities, or importance levels of the plurality of objects. For example, a first echo signal and a second echo signal are merely intended to distinguish between different echo signals, but do not indicate that the two types of echo signals are different in content, priority, sending sequence, importance level, or the like.

The foregoing describes some concepts in the embodiments of this application. The following describes technical features in the embodiments of this application.

Currently, to perform ranging on an object, a radio frequency identification (radio frequency identification, RFID) technology may be used.

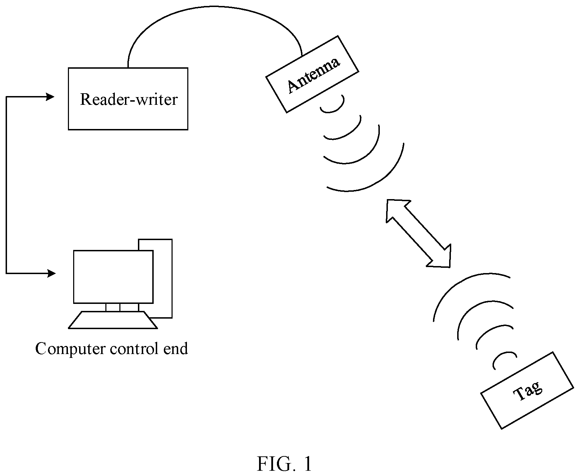

When ranging is performed by using the RFID technology, a tag (tag) may be disposed on a target object. A device for performing ranging is a reader-writer (or referred to as a reader). The reader-writer is coupled to and communicates with the tag by using electromagnetic waves. Refer to FIG. 1. In addition, FIG. 1 further includes an antenna of the reader-writer. The antenna is actually disposed inside the reader-writer, and the antenna is drawn outside the reader-writer for clarity of illustration. In addition, an antenna is also disposed inside the tag, but is not shown in FIG. 1. The reader-writer may be controlled through another device, for example, a computer, as shown in FIG. 1. Because there is no battery in a passive tag, energy required for the tag to work needs to be obtained from an electromagnetic field of the reader-writer. When beyond a response range of the reader-writer, the passive tag cannot enter a working mode. The tag can work only after receiving electromagnetic waves from the reader-writer and converting a part of received electromagnetic energy into direct current. The reader-writer sends a radio signal (namely, an electromagnetic wave). The tag receives the radio signal from the reader-writer, and then reflects the radio signal back. The reader-writer receives a reflected signal from the tag. In this case, the reader-writer may complete work like ranging on the tag based on the reflected signal.

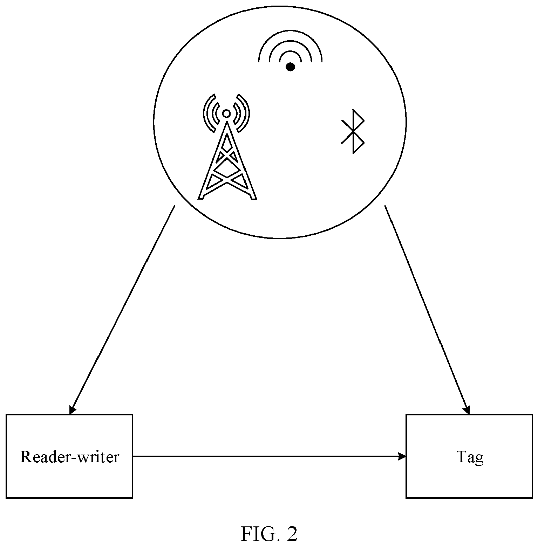

Currently, a backscatter communications system is also provided, as shown in FIG. 2. The system uses radio frequency signals such as television signals, cellular signals, or wireless fidelity (wireless fidelity, Wi-Fi) signals widely existing in an ambient environment as an excitation source, to implement information transmission between the tag and the reader-writer. The tag can work by using energy provided by an external signal, and the reader-writer does not need to provide energy for the tag, so that energy consumption can be greatly reduced. For example, in FIG. 2, the reader-writer also uses the radio frequency signals in the ambient environment to obtain energy.

An RFID-based ranging technology includes two methods based on a basic principle.

    1. The reader-writer sends a radio signal. The tag receives the radio signal from the reader-writer, and then reflects the radio signal back. The reader-writer receives a reflected signal from the tag. The reader-writer estimates a distance between the reader-writer and the tag by using a power of the reflected signal.

The power of the reflected signal is closely related to an environment, and the power of the reflected signal may be different in different environments. Accordingly, the distance estimated based on the power of the reflected signal is inaccurate.

2. The reader-writer sends a radio signal. After receiving the radio signal, the tag sends a response signal to the reader-writer after a fixed delay T1. After receiving the response signal, the reader-writer calculates a delay T2 between the radio signal and the response signal. (T2-T1)/2 is a time of propagation of the signals. The reader-writer may calculate the distance between the reader-writer and the tag based on a speed of the electromagnetic wave and the time of propagation.

T1 controlled by an analogue device may be different under different temperature conditions. However, a frequency of a digital clock cannot be infinite for a digital device. Therefore, T1 is also affected by sampling accuracy. In other words, the reader-writer considers that the tag causes a delay T1, but an actual delay caused by the tag may not be T1, may be less than T1 or greater than T1. As a result, accuracy of the distance calculated by the reader-writer is low.

It can be learned that the RFID-based ranging technology may cause an inaccurate ranging result. Therefore, a radar ranging method is now introduced.

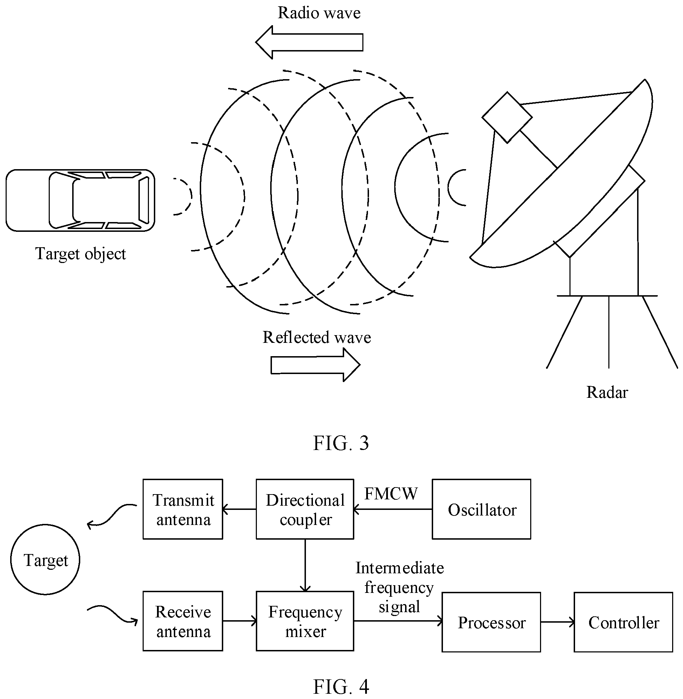

When used to perform ranging on a target object, the radar can transmit a radio wave, the radio wave is reflected back after reaching the target object, and the radar may determine a distance between the radar and the target object based on a reflected wave. Refer to FIG. 3. For example, the target object is a motor vehicle in FIG. 3. In addition, to distinguish between the transmitted radio wave and the reflected wave, the reflected wave is represented by a dashed line in FIG. 3.

The radar may obtain information about the target object based on electromagnetic energy of the reflected wave. A millimeter-wave radar is used as an example. The millimeter-wave radar usually includes an oscillator, a transmit antenna, a receive antenna, a frequency mixer, a processor, a controller, and the like. FIG. 4 is a working principle diagram of the millimeter-wave radar. The oscillator produces a radio signal with a linear increase in frequency over time. The radio signal is typically in a form of frequency-modulated continuous waves. A part of the radio signal is output, by a directional coupler, to the frequency mixer as a local oscillator signal, and another part of the radio signal is transmitted out by the transmit antenna. The transmitted radio signal is reflected back when encountering the target object. The receive antenna of the millimeter-wave radar receives the reflected transmit signal. The frequency mixer mixes the received transmit signal with the local oscillator signal to obtain an intermediate frequency signal. The intermediate frequency signal includes information such as a relative distance between the target object and the millimeter-wave radar, a speed of the target object, and an angle of the target object. After passing through a low-pass filter and being amplified, the intermediate frequency signal is transmitted to the processor. The processor processes the received signal, and usually performs fast Fourier transform and spectrum analysis on the received signal, to obtain information such as a distance, a speed, and an angle of the target object relative to the millimeter-wave radar. However, when the target object is in a large reflection background, electromagnetic energy reflected by the target object is far less than electromagnetic energy reflected by an environment. If the target object is in a stationary state, the radar may not be able to distinguish between a reflected wave from the target object and a reflected wave from the environment. As a result, the target object cannot be identified. For example, if the target object is a wall clock hanging on a wall, the large reflection background is a surface of the wall. A radio signal transmitted by the radar is reflected after reaching the wall clock, the radio signal is also reflected after reaching the surface of the wall, and the wall clock is very small relative to the surface of the wall in area. Therefore, electromagnetic energy reflected by the wall clock is far less than electromagnetic energy reflected by the surface of the wall. Then, after a reflected signal from the wall clock and a reflected signal from the surface of the wall reach the radar, the radar cannot distinguish between the two reflected signals, and may consider that the two reflected signals are a same reflected signal. As a result, the wall clock cannot be detected, and accordingly, ranging cannot be performed on the wall clock.

In view of this, the technical solutions in the embodiments of this application are provided. In the embodiments of this application, a target apparatus may modulate some of reflected signals based on a first transmit signal, to obtain a first echo signal. A first Doppler shift exists between the first echo signal and the first transmit signal. In this way, after a detection apparatus receives the first echo signal, even if the detection apparatus further receives an echo signal from an environment, the detection apparatus can identify, based on Doppler frequencies, the first echo signal from the target apparatus because a Doppler frequency of the first echo signal is different from a Doppler frequency of the echo signal from the environment. Therefore, the detection apparatus can identify the target apparatus, and can also perform ranging on the target apparatus based on the first echo signal. It can be learned that, by using the technical solutions provided in the embodiments of this application, tasks such as identification and ranging can be completed even for a stationary target apparatus or a target apparatus that moves at a low speed in a large reflection background.

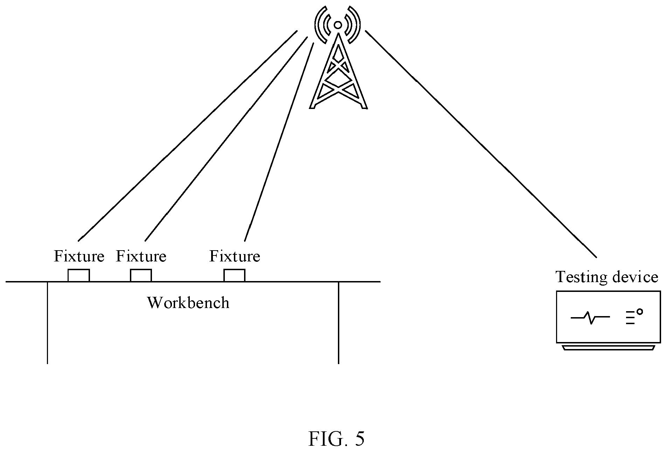

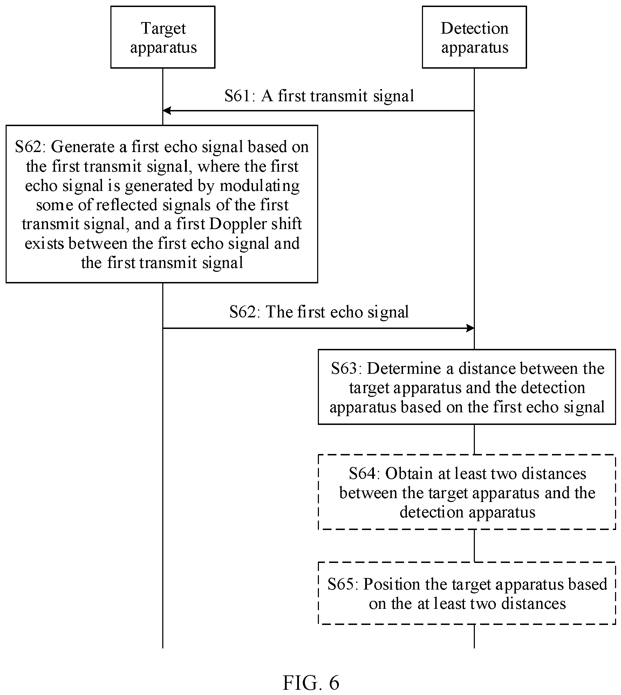

The embodiments of this application may be applied to a positioning scenario in which low power consumption and high precision are required. Certainly, the embodiments of this application may also be applicable to another positioning scenario. In addition, the target apparatus in the embodiments of this application may be in a stationary state, or may be in a low-speed moving state. Refer to FIG. 5. An application scenario of the embodiments of this application is described. FIG. 5 is a simple scenario of a factory, and the factory is located within a coverage range of a network device shown in FIG. 5. For example, devices such as a workbench, a testing device, and fixtures are disposed in the factory. The fixtures may be disposed on the workbench. For example, in FIG. 5, three fixtures are disposed on the workbench. The fixtures are small and the workbench is large, and the fixtures are stationary on the workbench. For example, the network device needs to measure a distance between the network device and a fixture. It is clear that the fixture is located in a relatively large reflection background of the workbench. It can be learned from the foregoing description that if an existing ranging manner is used, a radio signal sent by the network device will be reflected by both the fixture and the table after reaching the fixture and the workbench. However, the network device may identify the two reflected signals as one reflected signal. Therefore, the network device cannot identify the fixture, and accordingly cannot complete work like performing ranging on the fixture. However, after the technical solutions provided in the embodiments of this application are used, the network device can complete ranging on the fixture. For example, in FIG. 6, the target apparatus is in a stationary state. In the technical solutions provided in the embodiments of this application, ranging can also be implemented for an apparatus in a low-speed motion state. In addition, an application scenario of the embodiments of this application is not limited to the scenario of the factory shown in FIG. 5.

The network device in FIG. 5 is, for example, a base station. The base station corresponds to a different device in a different system. For example, in a 4G system, the base station may correspond to a base station in 4G, for example, an eNB. In a 5G system, the base station corresponds to a base station in 5G, for example, a gNB. For another example, in another possible communications system, the base station corresponds to a control device or control apparatus having a communication management function. Certainly, the technical solutions provided in the embodiments of this application may also be applied to a future mobile communications system. Therefore, the network device in FIG. 5 may also correspond to an access network device in the future mobile communications system. In FIG. 5, the network device is, for example, a base station. Actually, with reference to the foregoing description, the network device may alternatively be a device, for example, an RSU. A specific type of the network device is not specifically limited in the embodiments of this application.

With reference to the accompanying drawings, the following describes the technical solutions provided in the embodiments of this application.

It should be noted that a first Doppler shift represents an offset in frequency domain. In the embodiments of this application, a "Doppler frequency corresponding to a signal" and similar expressions are further quoted. Such expressions are intended to describe a Doppler frequency corresponding to the signal of a target apparatus or a detection apparatus. For example, a "first Doppler frequency corresponding to a signal" refers to a Doppler frequency corresponding to the signal at the target apparatus, and a value of the "first Doppler frequency corresponding to the signal" may be equal to a value of a "first Doppler shift" of the signal. However, due to a movement and the like of the target apparatus, a specific frequency error may be brought to the signal. As a result, a specific deviation may exist between a Doppler frequency corresponding to the signal at a detection apparatus (referred to as a "second Doppler frequency corresponding to the signal" in the embodiments of this application) and "the first Doppler shift" of the signal. However, a person skilled in the art may know that physical meanings of the two are the same, except that in an implementation, there is a specific error between the "second Doppler frequency corresponding to the signal" and the "first Doppler shift" of the signal. A "transmit signal corresponding to the signal" means that the signal is obtained by reflecting the transmit signal by the target apparatus. For example, the detection apparatus sends the transmit signal, the transmit signal is reflected after reaching the target apparatus, and a reflected signal is obtained. The target apparatus modulates a part of the reflected signal by using a modulation manner provided in the embodiments of this application, and a modulated signal is the signal.

An embodiment of this application provides a signal processing method. FIG. 6 is a flowchart of this method. In the following description, the method is applied to, for example, a network architecture shown in FIG. 5. The method provided in the embodiment shown in FIG. 6 may be performed by a detection apparatus and a target apparatus. The detection apparatus is, for example, a radar (or referred to as a radar apparatus), or the detection apparatus may be a chip installed in a communications device. The communications device is, for example, a radar (or a radar apparatus), or another device. Alternatively, the detection apparatus may be a reader-writer or the like. The detection apparatus may be used as an independent device, or may be disposed on another device, for example, disposed on the base station in the network architecture shown in FIG. 5. The target apparatus is, for example, any target object. For example, a fixture in the network architecture shown in FIG. 5 may be the target object. Alternatively, the target apparatus may be a tag disposed on a target object. For example, the tag may be disposed on one fixture in the network architecture shown in FIG. 5. The detection apparatus may complete ranging for the target object by measuring a distance between the detection apparatus and the target apparatus.

S61: The detection apparatus sends a first transmit signal to the target apparatus. Correspondingly, the target apparatus receives the first transmit signal from the detection apparatus, or the target apparatus reflects and/or processes the first transmit signal from the detection apparatus, to generate an echo signal.

The first transmit signal is, for example, a radio signal or an electromagnetic wave signal. If the detection apparatus is a radar detection apparatus, the first transmit signal may also be referred to as a radar signal. A waveform of the first transmit signal is, for example, a constant-envelope single-tone waveform. In other words, the first transmit signal is a sine signal with a single waveform, or the first transmit signal may be a frequency-modulated continuous wave signal, or a signal with another waveform. A signal class is not specifically limited in this embodiment of this application, and may specifically depend on a type of a signal sending apparatus.

S62: The target apparatus generates a first echo signal based on the first transmit signal. The first echo signal is generated by modulating some of reflected signals of the first transmit signal, and a first Doppler shift exists between the first echo signal and the first transmit signal. The reason why the first echo signal is generated by modulating some of the reflected signals of the first transmit signal is that generally, modulation cannot be implemented on all the reflected signals of the first transmit signal in an actual technology, and some of the reflected signals may fail to be modulated and may be directly returned to the detection apparatus. "A first Doppler shift exists between the first echo signal and the first transmit signal" may alternatively be described as "the first echo signal corresponds to the first Doppler shift", or described as "relative to the first transmit signal, the first echo signal corresponds to the first Doppler shift". The first echo signal may be used to determine a distance between the detection apparatus and the target apparatus. It should be noted that, for clear description of the solution, the first echo signal herein is described as being "generated by modulating some of the reflected signals of the first transmit signal". Alternatively, the first echo signal may be described as being "generated based on modulation and reflection of some of the signals of the first transmit signal". It can be learned that, in this embodiment of this application, whether reflection is performed before or after modulation is not limited. Technically, a sequence of reflection and modulation is not limited. Reflection and modulation may be considered as independent or unified in processing, and the first echo signal finally generated is received by the detection apparatus. In the following description, that reflection is performed before modulation is mostly taken as an example for description.

In this embodiment of this application, the target apparatus may have a built-in power module, for example, a built-in battery. The target apparatus may work by using the built-in battery, and does not need external energy, for example, does not need to obtain energy by receiving a signal from the detection apparatus. Alternatively, the target apparatus may not have a built-in power module, and needs external energy. For example, the target apparatus may obtain energy by receiving a signal from the detection apparatus. For example, if the target apparatus receives the first transmit signal, a part of electromagnetic energy of the first transmit signal may be converted into electric energy for working of the target apparatus. In this case, a part of the first transmit signal is reflected by the target apparatus in S62. It may be considered that the target apparatus reflects a part of the first transmit signal, and modulates a first part of reflected signals obtained through reflection, to generate the first echo signal. A manner of modulating the first part of reflected signals by the target apparatus is described in the following. Alternatively, the target apparatus may not obtain energy through the detection apparatus. For example, the target apparatus may obtain energy by using radio frequency signals such as television signals, cellular signals, or Wi-Fi signals widely existing in an environment as an excitation source. In this case, all of the first transmit signal may be reflected by the target apparatus in S62. Certainly, if actual errors are considered, a part of the first transmit signal may be reflected by the target apparatus in S62.

After reaching the target apparatus, the first transmit signal is reflected by the target apparatus, and the reflected signals are obtained. The target apparatus may modulate some of the reflected signals. For example, the modulated reflected signals are referred to as the first part of reflected signals, and a modulated signal is referred to as the first echo signal.

All of reflected signals but the first part of reflected signals are not modulated. For example, the unmodulated part is referred to as a second part of reflected signals, and the second part of reflected signals is directly returned to the detection apparatus. The target apparatus sends the first echo signal to the detection apparatus, or considers that even if the first echo signal is modulated, the first echo signal is essentially a reflected signal. Therefore, that the target apparatus obtains the first echo signal through reflection and modulation is actually that the target apparatus sends the first echo signal to the detection apparatus. In the solution of this embodiment of this application, "reflecting" and "sending" may be considered a same operation, or "generating the first echo signal" and "sending the first echo signal" may be considered a same operation. Therefore, S62 may further include: The detection apparatus receives the first echo signal from the target apparatus. FIG. 6 also shows an arrow indicating that the target apparatus sends the first echo signal to the detection apparatus. The reflected signals obtained by the target apparatus by reflecting the first transmit signal further include the second part of reflected signals besides the first part of reflected signals. The second part of reflected signals is directly reflected back to the detection apparatus and is not modulated. In this case, the detection apparatus also receives the second part of reflected signals from the target apparatus.

It should be noted herein that modulation in this embodiment of this application is to modulate some of the reflected signals (referred to as the first part of reflected signals in this specification). This part of transmit signals may be some reflected signals determined according to a specific rule. Alternatively, due to technical implementation and the like, only some reflected signals can be modulated. However, a person skilled in the art may know that the solution in this embodiment of this application does not exclude a scenario in which all the reflected signals are modulated. If the target apparatus can modulate all the transmit signals, S62 may be replaced by: The target apparatus generates a first echo signal based on the first transmit signal. The first echo signal is generated by modulating reflected signals of the first transmit signal, and the first Doppler shift exists between the first echo signal and the first transmit signal. The reflected signals may be some or all of reflected signals obtained by reflecting the first transmit signal.

The target apparatus modulates the first part of reflected signals, for example, modulates amplitudes of the first part of reflected signals. For example, the target apparatus may modulate the amplitudes of the first part of reflected signals by changing impedance of an antenna of the target apparatus, to obtain the first echo signal.

In an optional implementation, for example, the impedance of the antenna of the target apparatus has a plurality of values, and this may be understood as that there are a plurality of tap positions and at least one switch is disposed. When the at least one switch is connected to a different tap position, the impedance of the antenna of the target apparatus is different. However, the target apparatus may control the at least one switch, to adjust the impedance of the antenna of the target apparatus. The antenna of the target apparatus described herein is not an antenna used by the target apparatus to generate and send a signal, but an antenna used by the target apparatus to reflect a signal from another apparatus. The first echo signal is obtained by reflecting and modulating the first part of reflected signals by the target apparatus. An amplitude of a signal reflected by the target apparatus is related to the impedance of the antenna of the target apparatus. For example, when the impedance of the antenna of the target apparatus matches impedance of the target apparatus, the amplitude of the signal reflected by the target apparatus is relatively large, and when the impedance of the antenna of the target apparatus does not match the impedance of the target apparatus, the amplitude of the signal reflected by the target apparatus is relatively small. It can be learned that when the impedance of the antenna of the target apparatus is different, an amplitude of an echo signal is different. Therefore, the target apparatus may control the at least one switch to switch the impedance of the antenna of the target apparatus between at least two values, to modulate the amplitudes of the first part of reflected signals to obtain the first echo signal. The at least two values may include all values of the impedance of the antenna of the target apparatus, or include some values of the impedance of the antenna of the target apparatus. For example, if a quantity of all the values of the impedance of the antenna of the target apparatus is 2, the target apparatus may control the at least one switch to switch the impedance of the antenna of the target apparatus between the two values. Alternatively, if the quantity of all the values of the impedance of the antenna of the target apparatus is 3, the target apparatus may control the at least one switch to switch the impedance of the antenna of the target apparatus between the three values, or the target apparatus may control the at least one switch to switch the impedance of the antenna of the target apparatus between two of the three values, and so on.

The target apparatus may switch the impedance of the antenna of the target apparatus between at least two values in different switching manners. Further, optionally, in different switching manners, duration of at least two values of the impedance of the antenna of the target apparatus is different. However, the duration of the at least two values of the impedance of the antenna of the target apparatus, or a switching manner of the impedance of the antenna of the target apparatus may be set by the target apparatus, may be configured by the detection apparatus, or may be preconfigured in the target apparatus.

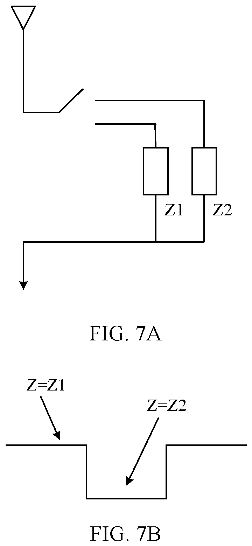

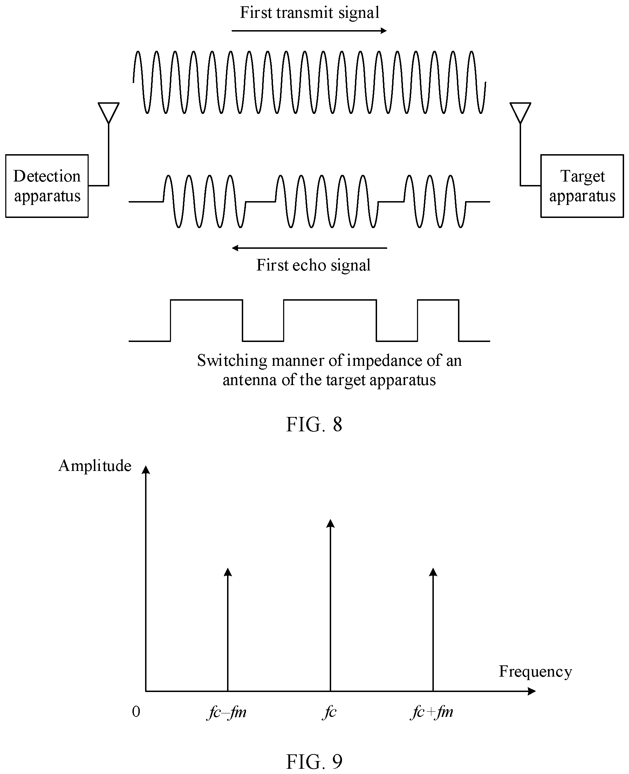

For example, a manner in which the target apparatus switches the impedance of the antenna is that the duration of the at least two values of the impedance of the antenna of the target apparatus is the same. For example, at least two impedances means two impedances and there is one switch. For example, refer to FIG. 7A. The two impedances are respectively an impedance 1 (represented by Z1 in FIG. 7A) and an impedance 2 (represented by Z2 in FIG. 7A), and may be controlled by using the switch. For example, the target apparatus first connects the switch to a tap position of the impedance 1. In this case, the impedance of the antenna of the target apparatus is the impedance 1. After staying at the impedance 1 for first duration, the target apparatus connects the switch to a tap position of the impedance 2. In this case, the impedance of the antenna of the target apparatus is the impedance 2. After staying at the impedance 2 for the first duration, the target apparatus connects the switch to the tap position of the impedance 1 again, and so on. In this manner, duration of the impedance 1 is the first duration when the impedance of the antenna of the target apparatus is the impedance 1, and duration of the impedance 2 is also the first duration when the impedance of the antenna of the target apparatus is the impedance 2. The first echo signal obtained in this manner is a square wave signal. For example, when the impedance of the antenna of the target apparatus is the impedance 1, an amplitude of the first echo signal is a wave crest, and when the impedance of the antenna of the target apparatus is the impedance 2, the amplitude of the first echo signal is a wave trough, as shown in FIG. 7B. In FIG. 7B, Z represents the impedance of the antenna of the target apparatus, Z1 represents the impedance 1, and Z2 represents the impedance 2. To understand more vividly, refer again to FIG. 8. The detection apparatus is shown on the left side in FIG. 8. The detection apparatus sends the first transmit signal, and the waveform of the first transmit signal is, for example, a constant-envelope single-tone waveform. The target apparatus is shown on the right side in FIG. 8. The target apparatus reflects the first transmit signal to obtain the reflected signals. The target apparatus modulates the first part of reflected signals among the reflected signals by switching the impedance of the antenna of the target apparatus, to obtain the first echo signal. FIG. 8 further includes a square wave signal. The square wave signal is used to represent a manner in which the target apparatus switches the impedance of the antenna of the target apparatus, or represent a switching rule. Further, refer to FIG. 9. A horizontal axis in FIG. 9 represents a frequency, and a vertical axis represents an amplitude. Three vertical lines included in FIG. 9 represent three frequencies. For example, the vertical line in the middle represents a frequency of the first transmit signal. A frequency of the second part of reflected signals among the reflected signals is the same as the frequency of the first transmit signal, and the frequency is represented as $f_c$. The two vertical lines on both sides of the frequency $f_c$ in FIG. 9 represent frequencies of the first echo signal, and the frequencies are respectively $(f_c + f_m)$ and $(f_c - f_m)$. It can be learned that because the amplitudes of the first part of reflected signals are modulated, the frequency of the first echo signal changes relative to the frequency of the first transmit signal, and new frequency components $+f_m$ and $-f_m$ are generated, where $+f_m$ and $-f_m$ may be considered as first Doppler frequencies corresponding to the first echo signal, or $f_m$ may be considered as a first Doppler frequency corresponding to the first echo signal. For example, in FIG. 9, the first echo signal corresponds to two new frequencies. Actually, the first echo signal may correspond to one or more frequencies.

When one modulation manner is used for the first part of reflected signals, one frequency component or two frequency components may be obtained. If more modulation manners are used for the first part of transmit signals, the first echo signal may correspond to more frequency components, and the first Doppler frequency corresponding to the first echo signal may be determined based on a plurality of frequency components, so that the determined first Doppler frequency of the first part of reflected signals is more accurate. This embodiment of this application is mainly described by using an example in which two frequency components are obtained.

Alternatively, another manner in which the target apparatus switches the impedance of the antenna is that duration of at least two values of the impedance of the antenna of the target apparatus is different. If the at least two values means more than two values, the duration of the at least two values of the impedance of the antenna of the target apparatus may be different, or duration of some of the at least two values of the impedance of the antenna of the target apparatus is the same, and duration of the remaining values is different. For example, at least two impedances means three impedances and there is one switch. The three impedances are respectively an impedance 1, an impedance 2, and an impedance 3. For example, the target apparatus first connects the switch to a tap position of the impedance 1. In this case, the impedance of the antenna of the target apparatus is the impedance 1. After staying at the impedance 1 for first duration, the target apparatus connects the switch to a tap position of the impedance 2. In this case, the impedance of the antenna of the target apparatus is the impedance 2. After staying at the impedance 2 for second duration, the target apparatus connects the switch to a tap position of the impedance 3. In this case, the impedance of the antenna of the target apparatus is the impedance 3. After staying at the impedance 3 for third duration, the target apparatus connects the switch to the tap position of the impedance 1 again, and so on. In this manner, duration of the impedance 1 is the first duration when the impedance of the antenna of the target apparatus is the impedance 1, duration of the impedance 2 is the second duration when the impedance of the antenna of the target apparatus is the impedance 2, and duration of the impedance 3 is the third duration when the impedance of the antenna of the target apparatus is the impedance 3. The first duration, the second duration, and the third duration are all different. Alternatively, two of the first duration, the second duration, and the third duration are the same, and the same two durations are different from the other duration.

The target apparatus modulates the amplitudes of the first part of reflected signals by switching the impedance of the antenna, to generate the first echo signal. It may be considered that the target apparatus sends the first echo signal obtained through modulation to the detection apparatus in a modulation process.

In this embodiment of this application, the first echo signal may correspond to the first Doppler frequency, and may correspond to a second Doppler frequency. The first Doppler frequency is a Doppler frequency corresponding to the first echo signal at the target apparatus. In other words, the first Doppler frequency is a difference between a frequency of the first echo signal at the target apparatus and the frequency of the first transmit signal at the target apparatus. Therefore, it may be understood as that at the target apparatus, the first echo signal corresponds to the first Doppler frequency relative to the first transmit signal. If the target apparatus needs to determine a Doppler frequency of the first echo signal, the determined Doppler frequency of the first echo signal is the first Doppler frequency. Certainly, the target apparatus does not necessarily perform an operation of determining the first Doppler frequency. The second Doppler frequency means that the target apparatus sends the first echo signal to the detection apparatus, and the first echo signal received by the detection apparatus corresponds to a Doppler frequency. In this case, the Doppler frequency of the first echo signal at a detection apparatus is the second Doppler frequency. In other words, the second Doppler frequency is a difference between a frequency of the first echo signal at the detection apparatus and the frequency of the first transmit signal at the detection apparatus. Therefore, it may be understood as that at the detection apparatus, the first echo signal corresponds to the second Doppler frequency relative to the first transmit signal. If the detection apparatus needs to determine the Doppler frequency of the first echo signal, the determined Doppler frequency of the first echo signal is the second Doppler frequency. Certainly, the detection apparatus does not necessarily perform an operation of determining the second Doppler frequency. The first Doppler frequency and the second Doppler frequency may be equal or may not be equal. For example, if the target apparatus is in a moving state, and a movement of the target apparatus brings a specific Doppler frequency, the second Doppler frequency is a sum of the first Doppler frequency and the Doppler frequency brought by the movement of the target apparatus. In this case, the first Doppler frequency and the second Doppler frequency are not equal. For another example, if the target apparatus is in a stationary state, and no additional Doppler frequency is generated in a process of sending the first echo signal by the target apparatus, the second Doppler frequency may be equal to the first Doppler frequency.

In addition, the first echo signal also corresponds to the first Doppler shift in addition to the first Doppler frequency, or the first Doppler shift exists between the first echo signal and the first transmit signal. The first Doppler shift described herein may be considered as a difference between the frequency of the first echo signal at the target apparatus and the frequency of the first transmit signal at the target apparatus. For example, the first Doppler shift is preset. In other words, the first Doppler shift may be considered as a preset value or understood as a theoretical value, that is, the first Doppler shift is a theoretical frequency difference between the first echo signal at the target apparatus and the first transmit signal at the target apparatus. The first Doppler frequency may be considered as an actual value. In other words, the first Doppler frequency is an actual frequency difference between the first echo signal at the target apparatus and the first transmit signal at the target apparatus. In this embodiment of this application, the term "shift" is used to represent a theoretical Doppler frequency of a signal, and the term "frequency" is used to represent an actual Doppler frequency of a signal. For example, the second Doppler frequency described herein refers to an actual frequency difference between the first echo signal at the detection apparatus and the first transmit signal at the detection apparatus. In the embodiments of this application, it is considered that the first Doppler frequency is equal to the first Doppler shift, or that the first Doppler frequency corresponding to the first echo signal should be equal to the first Doppler shift, so that the detection apparatus can correctly detect the first echo signal.

In this embodiment of this application, the target apparatus switches the impedance of the antenna to modulate the first part of reflected signals. It may be understood that the target apparatus simulates a moving state, or the target apparatus obtains a simulated movement speed through modulation. The first Doppler frequency corresponding to the first echo signal is generated by using the simulated movement speed. Therefore, the first Doppler shift exists between the first echo signal and the first transmit signal. The simulated movement speed of the target apparatus means that the target apparatus simulates the moving state by modulating an amplitude of a signal, that is, the target apparatus generates a movement speed by modulating the amplitude of the signal. In other words, the target apparatus does not actually move, but the first echo signal reflects that the target apparatus is in a moving state. Therefore, the movement speed generated by the target apparatus by modulating the amplitude of the signal is referred to as the simulated movement speed. It is the simulated movement speed that brings the first Doppler shift to the first echo signal. In this case, the first Doppler shift may be a Doppler frequency corresponding to the simulated movement speed obtained by the target apparatus through modulation, or a theoretical Doppler frequency generated by the target apparatus through modulation. For example, the Doppler shift between the first echo signal and the first transmit signal is implemented by the target apparatus by switching the impedance of the antenna. A Doppler frequency generated by a simulated movement speed that is obtained by the target apparatus by switching the impedance of the antenna is 100 KHz. In this case, the first Doppler shift may be equal to 100 KHz.

Alternatively, the first echo signal may have an ambiguity. This may be understood as that due to factors such as non-ideality of a component of the target apparatus, the target apparatus does not generate an accurate simulated movement speed. This results in a deviation between the Doppler frequency corresponding to the simulated movement speed and a Doppler frequency actually generated by the target apparatus through modulation. If this case is considered, the first Doppler shift includes the Doppler frequency corresponding to the simulated movement speed and may also include a Doppler frequency generated due to the ambiguity of the first echo signal. For example, the first Doppler shift is a sum of the Doppler frequency corresponding to the simulated movement speed and the Doppler frequency corresponding to the ambiguity of the first echo signal, or the first Doppler shift is an actual Doppler frequency generated by the target apparatus through modulation.

Information about the ambiguity of the first echo signal may be represented, for example, as a first difference. The first difference may represent a frequency deviation when the target apparatus modulates the first part of reflected signals, or the first difference represents a difference between a Doppler frequency generated when the target apparatus actually modulates the first part of reflected signals and a Doppler frequency corresponding to a theoretical simulated movement speed. The first difference may be an absolute value, or may not be an absolute value. For example, the first difference may be determined by the detection apparatus and the target apparatus through negotiation in advance, or is set and notified to the detection apparatus by a network device, or is preset by the detection apparatus. For example, if a modulation manner is determined for a target apparatus (the modulation manner is, for example, a manner of switching impedance of an antenna of the target apparatus, and in this case, the modulation manner may also be referred to as a switching manner), ambiguity information or a first difference corresponding to the modulation manner is known. For example, there are three switching manners when the target apparatus switches the impedance of the antenna of the target apparatus, and each switching manner may correspond to one piece of ambiguity information, or correspond to one first difference. In this case, if the modulation manner is determined, the corresponding first difference may be determined, or if the first difference is determined, a corresponding modulation manner may be determined. For example, the target apparatus may notify the detection apparatus of a correspondence between the ambiguity information and the modulation manner in advance. However, for how to set a modulation manner used by the target apparatus, refer to the foregoing description. In conclusion, the information about the ambiguity of the first echo signal may be known for the detection apparatus. For example, the Doppler frequency corresponding to the simulated movement speed is 99.5 KHz, and the first Doppler shift is implemented by the target apparatus by switching the impedance of the antenna and may not be accurate during switching. Because a Doppler frequency generated due to the ambiguity is 0.5 KHz, that is, the first difference is 0.5 KHz, the first Doppler shift may be 100 KHz.

In some optional implementations, the first difference does not need to be separately set. Because the first difference is reflected in the first Doppler shift, only the first Doppler shift needs to be set.

In this embodiment of this application, the first Doppler shift corresponds to the modulation manner (or a modulation rule) of the target apparatus. This may be understood as that the other one may be determined provided that one of the first Doppler shift and the modulation manner is known. For example, if the first Doppler shift is determined, the modulation manner of the target apparatus can be determined. Alternatively, if the modulation manner of the target apparatus is determined, the first Doppler shift can be determined. Therefore, only any one of the first Doppler shift and the modulation manner of the target apparatus needs to be preset. As long as any one of the first Doppler shift and the modulation manner is determined, the other one may be determined. This reduces a setting process. Alternatively, both the first Doppler shift and the modulation manner of the target apparatus may be preset (but the first Doppler shift and the modulation manner correspond to each other). If the target apparatus implements modulation by switching the impedance of the antenna of the target apparatus, the modulation manner of the target apparatus may be a switching manner of the impedance of the antenna. For example, the modulation manner may include a time spent on each to-be-switched impedance.

If the first Doppler shift is preset, for example, the detection apparatus and the target apparatus may negotiate to determine the first Doppler shift in advance; or the first Doppler shift may be set by using the detection apparatus; or the first Doppler shift may be set by the target apparatus and notified to the detection apparatus; or the first Doppler shift may be set by the network device and notified to the detection apparatus and the target apparatus. Alternatively, if the modulation manner of the target apparatus is preset, for example, the detection apparatus and the target apparatus may negotiate to determine the modulation manner (or the modulation rule) of the target apparatus in advance; or the modulation manner may be set by the detection apparatus; or the modulation manner may be set by the target apparatus and notified to the detection apparatus; or the modulation manner may be set by the network device and notified to the detection apparatus and the target apparatus.

Regardless of whether the first Doppler shift is set by the detection apparatus or the target apparatus, in an optional manner of setting the first Doppler shift, the first Doppler shift may be determined based on a first speed. The first speed is, for example, a movement speed of an object with a highest movement speed in an environment in which the target apparatus is located, and the first speed may be set by the detection apparatus based on the movement speed of the object with the highest movement speed in the environment in which the target apparatus is located. Alternatively, the first speed may be preset, for example, set by the detection apparatus or the target apparatus, specified by a protocol, or set by the network device. Certainly, if the information about the ambiguity of the first echo signal is not considered, the first difference may not be considered when the first Doppler shift is set. If the information about the ambiguity of the first echo signal is considered, in addition to the first speed, the first difference may be further considered when the first Doppler shift is set. The environment in which the target apparatus is located may be a first area. In this case, the first speed is a speed of an object with a highest movement speed in the first area. The first area may be located within a detection range (or a coverage range) of the detection apparatus. For example, the first area may include the entire detection range or a part of the detection range of the detection apparatus. For example, if detection accuracy of the detection apparatus needs to be improved, a probability of failing to detect all to be detected needs to be reduced, or objects in a moving state are included in the entire detection range of the detection apparatus, the first area may include the entire detection range of the detection apparatus. For example, the detection apparatus may set the first speed based on a movement speed of an object with a highest movement speed in the entire detection range of the detection apparatus, and the first speed set in this way is accurate. Alternatively, most of objects included in a first part of the detection range of the detection apparatus are in a stationary state. For example, in the scenario shown in FIG. 5, only a production line disposed on the workbench may probably have a specific movement speed, and the workbench, the fixtures and the testing device are in a stationary state. In this case, all of the detection range but the first part of the detection range of the detection apparatus may be considered when the first speed is determined. For example, the detection apparatus may set the first speed based on a movement speed of an object with a highest movement speed in all of the detection range but the first part of the detection range of the detection apparatus. The first speed set in this way is relatively accurate, and has little impact on the detection accuracy of the detection apparatus. In addition, an area that is considered when the first speed is set is reduced. This helps simplify a process of determining the first speed.

The detection range of the detection apparatus may be understood as follows: The detection apparatus sends a transmit signal, and the transmit signal is reflected after reaching an object; if the signal reflected by the object can be received by the detection apparatus, the object is located within the detection range of the detection apparatus; if the signal reflected by the object cannot be received by the detection apparatus, the object is located outside the detection range of the detection apparatus.

Generally, a signal generated (or reflected) by an object with a higher speed corresponds to a higher Doppler frequency, and a signal generated (or reflected) by an object with a lower speed corresponds to a lower Doppler frequency. For example, the first Doppler shift in this embodiment of this application may be greater than a Doppler frequency corresponding to a signal generated (or reflected) by an object with the first speed. For example, the first Doppler shift is $f_m$. After receiving the first echo signal, the detection apparatus may input a difference frequency signal corresponding to the first echo signal into an RD spectrum. The detection apparatus may detect, in the RD spectrum, whether there is a corresponding signal at $+f_m$ and $-f_m$. If there is a corresponding signal at $+f_m$ and $-f_m$, a distance corresponding to the signal in the RD spectrum is the distance between the detection apparatus and the target apparatus. In addition, a frequency of the signal is the second Doppler frequency corresponding to the first echo signal, and is also a frequency of the difference frequency signal corresponding to the first echo signal. If the first Doppler shift is greater than the Doppler frequency corresponding to the signal generated (or reflected) by the object with the first speed, Doppler frequencies corresponding to all objects due to movement in the environment in which the target apparatus is located cannot reach the two frequencies, namely, $-f_m$ or $+f_m$ in the RD spectrum, so that a probability that the detection apparatus mistakenly considers a Doppler frequency corresponding to another object as the second Doppler frequency corresponding to the first echo signal is reduced, and a detection success rate of the detection apparatus is improved.

Regardless of whether the modulation manner of the target apparatus is set by the detection apparatus or the target apparatus, in an optional manner of setting the modulation manner of the target apparatus, the modulation manner of the target apparatus may also be determined based on the first speed. That the target apparatus modulates the impedance of the antenna may be understood as that the target apparatus simulates a moving state, or the target apparatus obtains a simulated movement speed through modulation. Therefore, the modulation manner of the target apparatus may be determined based on the first speed. For example, the simulated movement speed obtained by using the modulation manner of the target apparatus may be greater than the first speed. In this case, in the range-Doppler spectrum, all the Doppler frequencies corresponding to all the objects due to movement in the environment in which the target apparatus is located cannot reach the second Doppler frequency corresponding to the first echo signal, so that the probability that the detection apparatus mistakenly considers a Doppler frequency corresponding to another object as the second Doppler frequency corresponding to the first echo signal is reduced, and the detection success rate of the detection apparatus is improved.

If the target apparatus is in a stationary state, and a process in which the target apparatus modulates the first part of reflected signals is perfect, to be specific, the first echo signal corresponds only to the first Doppler shift and no longer corresponds to another Doppler frequency, or the first Doppler frequency, the first Doppler shift, and the second Doppler frequency that correspond to the first echo signal are equal. In this case, the detection apparatus can determine the distance between the detection apparatus and the target apparatus based on the first Doppler shift. However, the target apparatus may not be in a stationary state. For example, the target apparatus may be in a low-speed moving state. In this case, in addition to corresponding to the first Doppler shift, the first echo signal may also correspond to a Doppler frequency generated due to movement of the target apparatus. In other words, for the target apparatus, the Doppler frequency of the first echo signal is the first Doppler frequency (or the first Doppler shift); but for the detection apparatus, because the target apparatus is in a moving state in a process of sending the first echo signal, the Doppler frequency of the first echo signal determined by the detection apparatus is the second Doppler frequency, and the first Doppler frequency is not equal to the second Doppler frequency. If the first Doppler shift is considered as a Doppler frequency generated by modulating the first part of reflected signals by the target apparatus, or a Doppler frequency generated due to the simulated movement speed of the target apparatus, because of an actual movement speed of the target apparatus or a relative speed between the target apparatus and the detection apparatus, in addition to corresponding to the first Doppler shift, the first part of transmit signals also correspond to a Doppler frequency generated due to actual movement. For example, a sum of the first Doppler shift and the Doppler frequency is a Doppler frequency actually corresponding to a first reflected signal, that is, the second Doppler frequency is equal to a sum of the first Doppler shift and a Doppler frequency generated by actual movement of the target apparatus.

If the foregoing case is considered, the detection apparatus may cause a failure to detect all to be detected if the detection apparatus detects the first echo signal based on only the first Doppler shift. Therefore, optionally, to reduce a probability that the detection apparatus fails to detect all to be detected, in this embodiment of this application, a first threshold may be set, and a difference between the second Doppler frequency corresponding to the first echo signal and the first Doppler shift is enabled to be less than or equal to the first threshold. Therefore, the detection apparatus can determine the distance between the target apparatus and the detection apparatus based on the first Doppler shift and the first threshold.

For example, the detection apparatus and the target apparatus may negotiate to determine the first threshold in advance; or the first threshold may be set by the detection apparatus; or the first threshold may be set by the network device and notified to detection apparatus. Regardless of whether the first threshold is set by the detection apparatus or the target apparatus, in an optional manner of setting the first threshold, the first threshold may be determined based on first information, or the first threshold corresponds to the first information. It can be learned from the foregoing analysis that the first information may include preset speed information. The preset speed information may be preset actual speed information, or may be preset relative speed information.

The preset speed information is, for example, a first speed range. For example, if the first threshold is determined based on the first speed range. For example, in a determining manner, the first threshold may be greater than or equal to a maximum value of a Doppler frequency corresponding to the first speed range, or the first threshold may be greater than or equal to a Doppler frequency corresponding to a second speed. The second speed is a maximum value included in the first speed range. Alternatively, the preset speed information of the target apparatus may be the second speed. In this case, a speed range may not be considered. For example, the first speed range is determined by the detection apparatus and the target apparatus through negotiation in advance, or is set and notified to the detection apparatus by the network device, or is preset by the detection apparatus. For example, if the detection apparatus needs to perform ranging on the target apparatus whose movement speed is less than or equal to F, the second speed is, for example, the speed F, the preset speed information may be the speed F, and the first threshold may be determined based on the speed F. In this case, a preset speed of the target apparatus is the actual movement speed of the target apparatus. For another example, if the detection apparatus needs to perform ranging on the target apparatus whose relative movement speed with the detection apparatus is less than or equal to F, the first speed range may be determined based on the speed F. For example, the first speed range is [0, the speed F]. In this case, the preset speed of the target apparatus is the relative speed of the target apparatus relative to the detection apparatus. If the first threshold is determined based on the first speed range, the first threshold may be greater than or equal to a Doppler frequency corresponding to the speed F.

In addition, the first information may further include other information, and any information that can affect the Doppler frequency corresponding to the first echo signal may be included in the first information.

For example, if the target apparatus is in a relatively large reflection background, electromagnetic energy of the first echo signal from the target apparatus is far less than electromagnetic energy of an echo signal (for example, referred to as a second echo signal) obtained by reflecting the first transmit signal by an environment. A frequency of the second echo signal is the same as the frequency of the first transmit signal, and is also the same as the frequency of the second part of reflected signals. If the target apparatus is in a stationary state, the detection apparatus may not be able to distinguish between the first echo signal from the target apparatus and the second echo signal from the environment. As a result, a target object cannot be identified. For example, if the target apparatus is a tag disposed on a fixture shown in FIG. 6, the workbench on which the fixture is located is a relatively large reflection background. The first transmit signal transmitted by the detection apparatus is reflected after reaching the tag, and the first transmit signal is also reflected after reaching the workbench. An area of the tag is small relative to an area of the workbench. Therefore, electromagnetic energy of the echo signal reflected by the tag is far less than electromagnetic energy of the second echo signal reflected by the workbench. In this case, if the tag does not perform any processing on the reflected echo signal, after the echo signal reflected by the tag and the second echo signal transmitted by the workbench reach the detection apparatus, the detection apparatus cannot identify the echo signal reflected by the tag. It may be considered that only the second echo signal from the workbench is received. Therefore, the tag cannot be detected, and accordingly, ranging on the tag cannot be completed.

Therefore, in this embodiment of this application, the target apparatus may modulate the amplitudes of the first part of reflected signals transmitted by the target apparatus, to obtain the first echo signal. In this way, the amplitude of the first echo signal changes relative to an amplitude of the first transmit signal. Due to an amplitude change, the frequency of the first echo signal changes relative to the frequency of the first transmit signal, for example, new frequency components $+f_m$ and $-f_m$ are generated, or the first Doppler frequency $f_m$ is generated. If both the detection apparatus and the target apparatus are in a stationary state, or the detection apparatus and the target apparatus are relatively stationary, amplitudes of both the second echo signal and the second part of reflected signals are the same as the amplitude of the first transmit signal. Therefore, frequencies of both the second echo signal and the second part of reflected signals are the same as the frequency of the first transmit signal, so that the frequency of the first echo signal is different from the frequency of the second echo signal or the frequencies of the second part of reflected signals. A difference between the frequency of the first echo signal and a frequency of the first reflected signal is not equal to 0, and the difference is a Doppler shift between the first echo signal and the first reflected signal, for example, referred to as the first Doppler frequency. In this way, after the detection apparatus receives the first echo signal, even if the detection apparatus further receives the second echo signal from the environment and receives the second part of reflected signals from the target apparatus, because the first Doppler frequency corresponding to the first echo signal (in this case, the second Doppler frequency corresponding to the first echo signal is equal to the first Doppler frequency corresponding to the first echo signal) is different from Doppler frequencies of both the second echo signal from the environment and the second part of reflected signals from the target apparatus, the detection apparatus can identify the first echo signal based on the first Doppler shift, so that the target apparatus can be identified, and ranging may be performed on the target apparatus based on the first echo signal. It can be learned that, by using the technical solution provided in this embodiment of this application, tasks such as identification and ranging can be completed even for a stationary target apparatus in a large reflection background.

Certainly, if the detection apparatus and/or the target apparatus are/is not in a stationary state, or the detection apparatus and the target apparatus are not relatively stationary, an amplitude of the second echo signal may be different from the amplitude of the first transmit signal. The frequency of the second echo signal may be different from the frequency of the first transmit signal, that is, a Doppler frequency corresponding to the second echo signal is not equal to 0. In addition, the amplitudes of the second part of reflected signals may also be different from the amplitude of the first transmit signal, the frequencies of the second part of reflected signals may also be different from the frequency of the first transmit signal, and Doppler frequencies corresponding to the second part of reflected signals may either not be equal to 0. The Doppler frequency corresponding to the second echo signal may be the same as or different from the Doppler frequencies corresponding to the second part of reflected signals. However, because the first echo signal is generated by modulating the first part of reflected signals, it is clear that the frequency of the first echo signal is different from both the frequency of the second echo signal and the frequencies of the second part of reflected signals, and a frequency difference may be relatively large due to modulation. Therefore, the first Doppler frequency corresponding to the first echo signal is different from the Doppler frequency corresponding to the second echo signal, and the first Doppler frequency corresponding to the first echo signal is also different from the Doppler frequencies corresponding to the second part of reflected signals. In this way, after the detection apparatus receives the first echo signal, even if the detection apparatus further receives the second echo signal from the environment and receives the second part of reflected signals from the target apparatus, because the first Doppler frequency corresponding to the first echo signal is different from both the Doppler frequency of the second echo signal from the environment and the Doppler frequencies of the second part of reflected signals from the target apparatus, the second Doppler frequency corresponding to the first echo signal is different from both the Doppler frequency of the second echo signal that is from the environment and that is determined by the detection apparatus and the Doppler frequencies of the second part of reflected signals from the target apparatus. Therefore, the detection apparatus can identify the first echo signal based on the first Doppler shift and the first threshold.

In addition, in this embodiment of this application, because the first Doppler shift is set, optionally, a movement speed of the target apparatus (herein, referring to the actual movement speed of the target apparatus, or a relative speed of the target apparatus relative to the detection apparatus, instead of the simulated movement speed) needs to meet a specific condition, so that the detection apparatus can detect the target apparatus. In view of this, in this embodiment of this application, the speed of the target apparatus may be preset. For example, the first speed range is set. In this case, in this embodiment of this application, the target apparatus whose movement speed is within the first speed range may be detected. The first speed range is, for example, determined by the detection apparatus or the network device. For example, the first speed range may be determined based on a detection purpose of the detection apparatus. For example, if the detection apparatus needs to perform ranging on the target apparatus whose relative speed relative to the detection apparatus is less than or equal to F, the first speed range may be determined based on the speed F. For example, the first speed range is [0, the speed F]. Alternatively, the first speed range may be determined based on another factor. This is not specifically limited.

In addition, it can be learned from the foregoing description that the first speed range may also be used to determine the first threshold. To be specific, in this embodiment of this application, the movement speed of the target apparatus may be specified, or the first threshold may be set based on the specified movement speed, so that the detection apparatus can detect an echo signal of the target apparatus, to reduce the probability of failing to detect all to be detected. The first speed range may be a speed range corresponding to the actual movement speed of the target apparatus, or a speed range corresponding to the relative speed of the target apparatus relative to the detection apparatus.

The first speed range is set to enable a user using the detection apparatus and the target apparatus to clearly know how to set the speed of the target apparatus, or how to set a specific movement speed for an object on which the target apparatus is disposed. Therefore, the detection apparatus can complete, based on the first echo signal from the target apparatus, ranging of the target apparatus or the object on which the target apparatus is disposed.

S63: The detection apparatus determines the distance between the target apparatus and the detection apparatus based on the first echo signal.

For example, the detection apparatus may determine the difference frequency signal of the first echo signal, and may determine the distance between the target apparatus and the detection apparatus based on the difference frequency signal. For example, after determining the difference frequency signal, the detection apparatus may determine the frequency of the difference frequency signal. The frequency of the difference frequency signal is the second Doppler frequency corresponding to the first echo signal, and is an actual frequency difference that is between the first echo signal and the first transmit signal and that is determined by the detection apparatus. Therefore, the distance between the target apparatus and the detection apparatus can be determined based on the difference frequency signal. If the detection apparatus further receives a second echo signal from the environment in which the target apparatus is located, the detection apparatus may also determine a difference frequency signal, for example, referred to as a first difference frequency signal, corresponding to the second echo signal. In addition, if the detection apparatus further receives an unmodulated reflected signal from the target apparatus, the detection apparatus may also determine a difference frequency signal, for example, referred to as a second difference frequency signal, corresponding to the unmodulated reflected signal. A frequency of the first difference frequency signal is usually the same as a frequency of the second difference frequency signal, but a frequency of the difference frequency signal corresponding to the first echo signal is different from the frequency of the first difference frequency signal or the frequency of the second difference frequency signal. Therefore, the detection apparatus can identify the first echo signal.

The following describes a manner in which the detection apparatus obtains the difference frequency signal corresponding to the first echo signal.

It is assumed that the first transmit signal sent by the detection apparatus is:

$$u_T(t) = \exp\{j[2\pi f_0 t + \pi k(t - nT)^2 + \varphi_0]\} \qquad \text{(Formula 1)}$$

In formula 1, $k$ represents a chirp rate, $\varphi_0$ represents an initial phase of the first transmit signal, and $n$=0, 1, 2, ..., or L. T represents a period of a waveform of the first transmit signal. L indicates that L periods of waveforms are transmitted at a time. N represents the $n^{th}$ period in the L periods of waveforms. $f_0$ represents a frequency of a carrier. An instantaneous phase of the first transmit signal may be expressed as:

$$P_T(t) = 2\pi f_0 t + \pi k(t - nT)^2 + \varphi_0 \qquad \text{(Formula 2)}$$

An instantaneous phase of the first echo signal has a delay $t_r$ relative to the first transmit signal, where $t_r=2r/c$, $r$ represents the distance between the detection apparatus and the target apparatus, and c represents a propagation speed of a signal. $f_0$ represents an initial frequency of the first transmit signal, and $T$ represents a frequency modulation period of the first transmit signal. This can be expressed as:

$$P_R(t) = P_T(t - t_r) = 2\pi f_0(t - t_r) + \pi k(t - t_r - nT)^2 + \varphi_0 \qquad \text{(Formula 3)}$$

In formula 3, $P_R(t)$ represents the instantaneous phase of the first echo signal, and $P_T(t)$ represents the instantaneous phase of the first transmit signal.

The detection apparatus performs frequency mixing on the first echo signal and the first transmit signal, and a signal output after the frequency mixing is the difference frequency signal corresponding to the first echo signal. Because a frequency of the signal output after the frequency mixing is a frequency difference between the first echo signal at the detection apparatus and the first transmit signal at the detection apparatus, the signal is also referred to as a difference frequency signal. A phase of the difference frequency signal may be expressed as:

$$P_M(t) = P_T(t) - P_R(t) = 2\pi f_0 t_r - \pi k t_r^2 + 2\pi k t_r(t - nT) \qquad \text{(Formula 4)}$$

If the target apparatus is in a stationary state, $t_r$ may be a constant. In this case, the difference frequency signal may be a sine signal, and the frequency of the difference frequency signal is directly proportional to $t_r$. If the target apparatus is in a moving state, for example, the target apparatus has a radial movement speed $v$ relative to the detection apparatus, the frequency of the difference frequency signal is in a changing state. In this case, the difference frequency signal includes distance information and speed information of the target apparatus. In this case, a transmission delay between the first transmit signal and the difference frequency signal is:

$$t_r=2(r_0+\text{vt})/c \qquad \text{(Formula 5)}$$

In formula 5, $r_0$ represents the distance between the target apparatus and the detection apparatus when $t=0$. During data processing, data of one repetition period is usually used as a processing unit. Formula 5 is substituted into formula 4, and the frequency of the difference frequency signal obtained in one repetition period may be obtained after sorting, which is:

$$f(t-nT){=}\frac{dP_M(t-nT)}{2\pi dt} = \frac{2f_0 v}{c} + \frac{2kr_n}{c} - \frac{4kr_n v}{c^2} + \left(\frac{4kv}{c} - \frac{4kv^2}{c^2}\right)(t - nT){=}$$

$$f_{dv} + f_R(n) + f_{dRv}(n) + k_n(t - nT) \qquad \text{(Formula 6)}$$

In formula 6, $r_n = r_0 + Tvn$, which represents the distance between the target apparatus and the detection apparatus in an $n^{th}$ repetition period, where $n=0$, 1, 2, ..., or the like. $f_{dv}$ indicates that $f_0$ is a Doppler frequency generated due to the movement speed $v$ of the target apparatus. $f_R(n)$ represents a difference frequency that exists when the distance between the target apparatus and the detection apparatus is $r_n$, and the difference frequency in this case is also referred to as a distance difference frequency. In an actual situation, $v$ is far greater than $c$, and therefore, orders of magnitude of $f_R(n)$ and $f_{dv}$ are far smaller than an order of magnitude of $r_n$, and can be usually ignored. $f_{dRv}(n)$ and $k_n(t - nT)$ represent two algebraic terms, and are two high-order terms.

It can be learned from the foregoing analysis that the difference frequency signal corresponding to the first echo signal truly includes Doppler information (for example, a Doppler frequency) of the target apparatus, and includes information about the distance between the target apparatus and the detection apparatus. Therefore, the distance between the target apparatus and the detection apparatus can be determined by further processing the difference frequency signal.

To process the difference frequency signal, for example, a processing manner in which RD spectrum calculation is performed on the difference frequency signal is used. An RD spectrum is a range-Doppler spectrum. The difference frequency signal is input into the RD spectrum. In the RD spectrum, there is a correspondence between a distance and a Doppler frequency. The detection apparatus may determine whether there is a signal that meets an energy requirement in a first frequency range in the RD spectrum. If there is a signal that meets the energy requirement, a distance corresponding to the signal is the distance between the detection apparatus and the target apparatus. The first frequency range may be determined based on the first Doppler shift, or may be determined based on the first Doppler shift and the first threshold.

For example, if the first Doppler shift is $f_m$, the detection apparatus may determine whether there is a signal that meets the energy requirement at $+f_m$ and $-f_m$ in the RD spectrum. In this case, the first frequency range refers to two frequencies, namely, $+f_m$ and $-f_m$. If there is a signal that meets the energy requirement at $+f_m$ and $-f_m$, the detection apparatus may determine that a distance corresponding to the signal is the distance between the target apparatus and the detection apparatus. If there is no signal that meets the energy requirement at $+f_m$ and $-f_m$, the detection apparatus may determine that the detection fails. Alternatively, if the first threshold is considered, the detection apparatus may determine whether there is a signal that meets the energy requirement in two frequency ranges, namely, $[-f_m-f_k, -f_m+f_k]$ and $[f_m-f_k, f_m+f_k]$ in the RD spectrum. In this case, the first frequency range includes the two frequency ranges, namely, $[-f_m-f_k, -f_m+f_k]$ and $[f_m-f_k, f_m+f_k]$. If there is a signal that meets the energy requirement in the two frequency ranges $[-f_m-f_k, -f_m+f_k]$ and/or $[f_m-f_k, f_m+f_k]$, the detection apparatus may determine that a distance corresponding to the signal is the distance between the target apparatus and the detection apparatus. A Doppler frequency corresponding to the signal in the RD spectrum should be the second Doppler frequency corresponding to the first echo signal, namely, the frequency of the difference frequency signal corresponding to the first echo signal. $f_k$ represents the first threshold. When energy of the signal is greater than or equal to a third threshold, it is considered that the energy of the signal meets an energy condition. The third threshold is not limited in this embodiment of this application, and may be determined based on a factor, for example, a signal detection requirement or an environment. In this embodiment of this application, it is considered that a difference between the second Doppler frequency corresponding to the first echo signal and the first Doppler shift is less than or equal to the first threshold, that is, it is considered that the first echo signal can be detected. In this case, if the detection apparatus determines that there is no signal that meets the energy requirement in the first frequency range of the RD spectrum, it may indicate that the detection apparatus receives, for example, an interference signal instead of the first echo signal, and the detection apparatus does not need to determine a corresponding distance and may discard this signal.

It can be learned that, because the first echo signal may also correspond to other Doppler frequencies in addition to corresponding to the first Doppler shift, these Doppler frequencies may be considered by considering the first threshold, so that when the detection apparatus performs detection by using the RD spectrum, a detection range may be expanded, to reduce the possibility of missing detection.

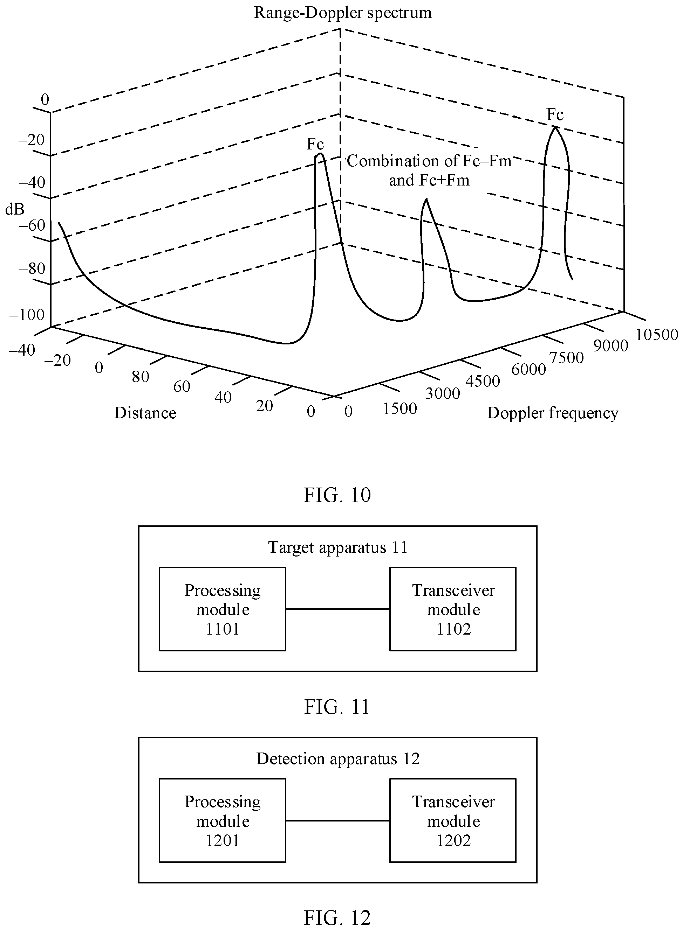

For example, FIG. 10 is an example of the RD spectrum. It should be noted that FIG. 10 is merely a schematic diagram of the RD spectrum, is merely used for illustrating how the detection apparatus identifies the first echo signal, and does not represent a real RD spectrum. In the RD spectrum, an X axis represents a distance, a Y axis represents a Doppler frequency, and a Z axis represents energy of a signal. A unit of the Z axis is dB, which represents a ratio of an actual receive power of the first echo signal (or a power of the difference frequency signal) to a reference power. This ratio is used to represent the energy of the signal, to reduce values. This helps simplify the RD spectrum. For example, the reference power may be a power of the first transmit signal, or the reference power may be another preset value. In FIG. 10, Fc is the $f_c$ described above, namely, the frequency of the first transmit signal. In FIG. 10, a signal corresponding to Fc is divided into two parts in a processing process, namely, signals represented by two Fcs in FIG. 10. Fm is the $f_m$ described above, and Fc-Fm and Fc+Fm are frequencies of the first echo signal. For example, in FIG. 10, Fc-Fm and Fc+Fm are combined in the processing process. In other words, the first echo signal actually corresponds to two second Doppler frequencies in the RD spectrum, one being -Fm and the other being +Fm. However, in the processing process, signals corresponding to the two second Doppler frequencies are combined, to obtain a signal represented by combination of Fc-Fm and Fc+Fm in FIG. 10. If the signal represented by the combination of Fc-Fm and Fc+Fm meets the energy requirement, the detection apparatus may determine that a distance corresponding to the signal is the distance between the target apparatus and the detection apparatus. If the frequency of the first transmit signal, the frequency of the second echo signal, and the frequency of the second part of reflected signals are the same, a Doppler shift between the second echo signal and the first transmit signal may be equal to 0, and a Doppler shift between the second part of reflected signals and the first transmit signal may also be equal to 0. However, the frequency of the first transmit signal is different from the frequency of the first echo signal, the first Doppler shift is not equal to 0, and the second Doppler frequency is also not equal to 0. It can be learned that the detection apparatus does not mistake the Doppler frequency corresponding to the second echo signal or the Doppler frequencies corresponding to the second part of reflected signals for the second Doppler frequency corresponding to the first echo signal. Therefore, the target apparatus modulates the reflected signals, so that the first echo signal generates the first Doppler shift relative to the first transmit signal, the detection apparatus can identify the first echo signal, and can perform ranging on the target apparatus.

A processing manner of inputting the difference frequency signal into the RD spectrum may be understood as performing Fourier transform on the difference frequency signal. For example, two-dimensional discrete Fourier transform (discrete Fourier transform, DFT) may be performed on the difference frequency signal. The following derives, from a mathematical perspective, a principle of using DFT to process the RD spectrum.

For example, Fourier transform of a continuous-time signal x(t) corresponding to the difference frequency signal corresponding to the first echo signal is:

$$X(f) = \int_0^{NT_r} x(t)\, exp(-j2\pi ft)\, dt \qquad \text{(Formula 7)}$$

The continuous-time signal $x(t)$ is sampled to obtain $x(m, l)$ that represents an $l^{th}$ sampling point of an $m^{th}$ repetition period. If $x(t)$ is sampled for $N_r$ repetition periods and $N_s$ points are sampled in each repetition period, $m=0$, 1, 2, ..., or $N_s$. $NT_r$ indicates that continuous-time Fourier transform is performed on waveforms in N repetition periods, where N is a natural number. Therefore, formula 7 may also be expressed as:

$$X(k) = \sum_{m=0}^{N_r-1} \sum_{l=0}^{N_s-1} x(m, l)\, exp\left(-j2\pi f(mT_r + lT_s)\right) T_s \qquad \text{(Formula 8),}$$

and

$$f = f_\Delta + f_d = l\frac{1/T_s}{N_s} + m\frac{1/T_r}{N_r} \qquad \text{(Formula 9)}$$

$f_\Delta$ represents a distance difference frequency signal corresponding to the difference frequency signal. $f_d$ represents the frequency of the difference frequency signal. $T_r$ represents a repetition period of the first transmit signal $T_s$ represents a reciprocal of a sampling frequency, where $T_r = T_s N_s$. Formula 8 is two-dimensional DFT. Formula 9 is substituted into formula 8, and the following formula may be obtained after simplification:

$$X(k) = \sum_{m=0}^{N_r-1} \sum_{l=0}^{N_s-1} x(m, l)\, exp\left(-j2\pi(\frac{m^2}{N_r} + \frac{l^2}{N_s})\right) T_s \qquad \text{(Formula 10)}$$

It can be learned from formula 10 that, if the discrete signal $x(m, l)$ is a sampled signal of the difference frequency signal, distance information and Doppler frequency information carried in the discrete signal $x(m, l)$ may be separated by performing DFT on the discrete signal $x(m, l)$. The distance information is extracted to obtain the distance between the detection apparatus and the target apparatus. In the foregoing calculation process, fast Fourier transform (fast Fourier transform, FFT) is used, to increase an operation speed. Actually, common Fourier transform may alternatively be used.

S64: The detection apparatus obtains at least two distances between the target apparatus and the detection apparatus. The at least two distances include the distance, determined in S63, between the target apparatus and the detection apparatus.

For example, there are a plurality of detection apparatuses that perform ranging on a same target apparatus, and the detection apparatus is one of the plurality of detection apparatuses. After completing ranging on the target apparatus, another detection apparatus may send determined distance information to the detection apparatus. In this case, the detection apparatus can determine the distance between the detection apparatus and the target apparatus, and can further obtain the distance information from the another detection apparatus, that is, the detection apparatus can obtain information about at least two distances, so that the at least two distances may be determined.

S65: The detection apparatus positions the target apparatus based on the at least two distances.

After obtaining information about the at least two distances, the detection apparatus may position the target apparatus. Specifically, the target apparatus is located at an intersection point of at least two circles that respectively use the at least two distances as radiuses and use corresponding detection apparatuses as circle centers.

For example, in a two-dimensional plane, the circles are drawn by using the at least two obtained distances as radiuses and using coordinates of the detection apparatuses as circle centers, and an intersection point of the two circles is a possible position of the target apparatus. When two circles intersect on the plane, two intersection points may occur. In this case, environment information may be used to determine a final position. For example, in an indoor positioning scenario, two circles have two intersection points, and one of the intersection points appears outside a wall and may be ignored. Alternatively, if an approximate position of the target apparatus is known, one of the intersection points of the two circles can be excluded. If no information such as the environment information is available, another detection apparatus can be used to position the target apparatus.

Alternatively, an operation of positioning the target apparatus may be completed by another device, for example, the network device. For example, there may be a plurality of detection apparatuses, and the plurality of detection apparatuses may all be disposed on the network device, for example, the network device shown in FIG. 5. Alternatively, some of the plurality of detection apparatuses are disposed on the network device, and the remaining detection apparatuses are separately disposed or are disposed on another device, but the remaining detection apparatuses can communicate with the network device. Alternatively, all the plurality of detection apparatuses are separately disposed or are disposed on another device other than the network device, but the plurality of detection apparatuses can communicate with the network device. In other words, the plurality of detection apparatuses separately perform ranging on the target apparatus, and may send information about obtained distances to the network device. Therefore, the network device may obtain the information about the at least two distances, determine the at least two distances, and position the target apparatus based on the at least two distances.

Alternatively, if only ranging is required and positioning is not required, the operation of positioning the target apparatus does not need to be performed.

It can be learned that S64 and S65 are only optional steps, and are not mandatory to be performed.

In addition, after the difference frequency signal corresponding to the first echo signal is determined, ranging can be performed on the target apparatus based on the difference frequency signal, and other corresponding information may be further obtained based on the difference frequency signal, for example, the speed of the target apparatus may be further determined, or an angle of the target apparatus relative to the detection apparatus may be further determined. Applications of the difference frequency signal are not limited in this embodiment of this application.

In this embodiment of this application, some of the reflected signals of the first transmit signal may be modulated, to obtain the first echo signal. The first Doppler shift exists between the first echo signal and the first transmit signal. In this way, after the detection apparatus receives the first echo signal, even if the detection apparatus further receives an echo signal from an environment, the detection apparatus can identify the first echo signal from the target apparatus because the second Doppler frequency corresponding to the first echo signal is different from a Doppler frequency of the echo signal from the environment. Therefore, the detection apparatus can identify the target apparatus, and can also perform ranging on the target apparatus based on the first echo signal. It can be learned that, by using the technical solution provided in this embodiment of this application, tasks such as identification and ranging can be completed even for a stationary target apparatus or a target apparatus that moves at a low speed in a large reflection background. In addition, compared with a ranging technology using RFID, this embodiment of this application considers an impact of an environment, and does not depend on precision of an analog component, and the like. Therefore, ranging precision can be improved.

The following describes, with reference to the accompanying drawings, apparatuses configured to implement the foregoing method in the embodiments of this application. Therefore, all the foregoing content may be used in subsequent embodiments, and repeated content is not described again.

In the embodiments of this application, the target apparatus or the detection apparatus may be divided into function modules. For example, the function modules may be obtained through division based on functions, or two or more functions may be integrated into one function module. The integrated module may be implemented in a form of hardware, or may be implemented in a form of a software function module. It should be noted that, in the embodiments of this application, division into modules is an example, and is merely a logical function division. In an actual implementation, another division manner may be used.

For example, when the target apparatus is divided into the function modules in an integrated manner, FIG. 11 is a schematic diagram of a possible structure of the target apparatus in the foregoing embodiments of this application. The target apparatus 11 is, for example, the target apparatus in the embodiment shown in FIG. 6. The target apparatus 11 is, for example, a target object that can modulate a reflected signal, or may be a function module, for example, a chip system or a tag, disposed on the target object. The target apparatus 11 may include a processing module 1101 and a transceiver module 1102. When the target apparatus 11 is a target object, the processing module 1101 may be a processor, for example, a baseband processor. The baseband processor may include one or more central processing units (central processing units, CPUs). The transceiver module 1102 may be a transceiver, and may include an antenna, a radio frequency circuit, and the like. When the target apparatus 11 is a tag, the processing module 1101 may be a processor, and the transceiver module 1102 may be an antenna. When the target apparatus 11 is a chip system, the processing module 1101 may be a processor of the chip system, and may include one or more central processing units, and the transceiver module 1102 may be an antenna of the chip system (for example, a baseband chip). Optionally, there may be a plurality of processors.

The processing module 1101 may be configured to perform all operations, except receiving and sending operations, performed by the target apparatus in the embodiment shown in FIG. 6, for example, S62, and/or configured to support another process of the technology described in this specification. The transceiver module 1102 may be configured to perform all receiving and sending operations performed by the target apparatus in the embodiment shown in FIG. 6, for example, S61 and S62, and/or configured to support another process of the technology described in this specification.

In addition, the transceiver module 1102 may be a function module, and the function module can complete both a sending operation and a receiving operation. For example, the transceiver module 1102 may be configured to perform all sending and receiving operations performed by the target apparatus 11. For example, when performing a sending operation, the transceiver module 1102 may be considered as a sending module, and when performing a receiving operation, the transceiver module 1102 may be considered as a receiving module. Alternatively, the transceiver module 1102 may be a joint name of two function modules. The two function modules are a sending module and a receiving module respectively. The sending module is configured to complete a sending operation. For example, the sending module may be configured to perform all sending operations performed by the target apparatus 11. The receiving module is configured to complete a receiving operation. For example, the receiving module may be configured to perform all receiving operations performed by the target apparatus 11.

The transceiver module 1102 is configured to receive a first transmit signal from a detection apparatus.

The processing module 1101 is configured to generate a first echo signal. The first echo signal is generated by modulating some of reflected signals of the first transmit signal, and a first Doppler shift exists between the first echo signal and the first transmit signal.

The first echo signal is used to determine a distance between the detection apparatus and the target apparatus 11.

In an optional implementation, a difference between a second Doppler frequency corresponding to the first echo signal and the first Doppler shift is less than or equal to a first threshold, the first threshold is determined based on first information, and the first information includes preset speed information of the target apparatus 11. Specifically, the second Doppler frequency corresponds to the distance between the detection apparatus and the target apparatus.

In an optional implementation, a speed of the target apparatus 11 is within a first speed range. The first speed range is preset.

In an optional implementation, the processing module 1101 is configured to generate the first echo signal in the following manner:

changing impedance of an antenna of the target apparatus 11, to modulate amplitudes of some of the reflected signals of the first transmit signal, to obtain the first echo signal.

In an optional implementation, the first Doppler shift is determined based on a first speed, and the first speed is a movement speed of an object with a highest movement speed in an environment in which the target apparatus 11 is located.

For example, when the detection apparatus is divided into the function modules in an integrated manner, FIG. 12 is a schematic diagram of a possible structure of the detection apparatus in the foregoing embodiment of this application. The detection apparatus 12 is, for example, the detection apparatus in the embodiment shown in FIG. 6. The detection apparatus 12 is, for example, a communications device, or the detection apparatus 12 may be a chip installed in a communications device. The communications device is, for example, a radar (or a radar apparatus), or the communications device may be another device. Alternatively, the detection apparatus 12 may be a reader-writer or the like. The detection apparatus 12 may include a processing module 1201 and a transceiver module 1202. When the detection apparatus 12 is a radar or a reader-writer, the processing module 1201 may be a processor, for example, a baseband processor. The baseband processor may include one or more CPUs. The transceiver module 1202 may be a transceiver, and may include an antenna, a radio frequency circuit, and the like. When the detection apparatus 12 is a component having a function of the foregoing radar, the processing module 1201 may be a processor, for example, a baseband processor, and the transceiver module 1202 may be a radio frequency unit. When the detection apparatus 12 is a chip system, the processing module 1201 may be a processor of the chip system, and may include one or more central processing units, and the transceiver module 1202 may be an input/output interface of the chip system (for example, a baseband chip).

The processing module 1201 may be configured to perform all operations, except receiving and sending operations, performed by the detection apparatus in the embodiment shown in FIG. 6, for example, S63 and S64, and/or configured to support another process of the technology described in this specification. The transceiver module 1202 may be configured to perform all receiving and sending operations performed by the detection apparatus in the embodiment shown in FIG. 6, for example, S61 and S62, and/or configured to support another process of the technology described in this specification.

In addition, the transceiver module 1202 may be a function module, and the function module can complete both a sending operation and a receiving operation. For example, the transceiver module 1202 may be configured to perform all sending and receiving operations performed by the detection apparatus 12. For example, when performing a sending operation, the transceiver module 1202 may be considered as a sending module, and when performing a receiving operation, the transceiver module 1202 may be considered as a receiving module. Alternatively, the transceiver module 1202 may be a joint name of two function modules. The two function modules are a sending module and a receiving module respectively. The sending module is configured to complete a sending operation. For example, the sending module may be configured to perform all sending operations performed by the detection apparatus 12. The receiving module is configured to complete a receiving operation. For example, the receiving module may be configured to perform all receiving operations performed by the detection apparatus 12.

For example, the transceiver module 1202 is configured to send a first transmit signal.

The transceiver module 1202 is further configured to receive a first echo signal from a target apparatus. The first echo signal is generated by modulating some of reflected signals of the first transmit signal; and relative to the first transmit signal, the first echo signal corresponds to a second Doppler frequency.

The processing module 1201 is configured to determine a distance between the detection apparatus 12 and the target apparatus based on the first echo signal.

In an optional implementation, a difference between the second Doppler frequency and a first Doppler shift corresponding to the first echo signal is less than or equal to a first threshold, the first threshold corresponds to first information, and the first information includes preset speed information.

In an optional implementation, the processing module 1201 is configured to determine the distance between the detection apparatus 12 and the target apparatus based on the first echo signal in the following manner:

determining a difference frequency signal corresponding to the first echo signal; and

determining the distance between the detection apparatus 12 and the target apparatus based on the difference frequency signal.

In an optional implementation, the processing module 1201 is configured to determine the distance between the detection apparatus 12 and the target apparatus based on the difference frequency signal in the following manner:

inputting the difference frequency signal into a range-Doppler spectrum, where the range-Doppler spectrum is used to represent a relationship between a distance, a Doppler frequency, and signal energy; and

determining that a distance corresponding to a signal in a first frequency range in the range-Doppler spectrum is the distance between the detection apparatus 12 and the target apparatus, where the first frequency range is determined based on the first Doppler shift and the first threshold.

In an optional implementation, the first Doppler shift is determined based on a first speed, and the first speed is a movement speed of an object with a highest movement speed in an environment in which the target apparatus is located.

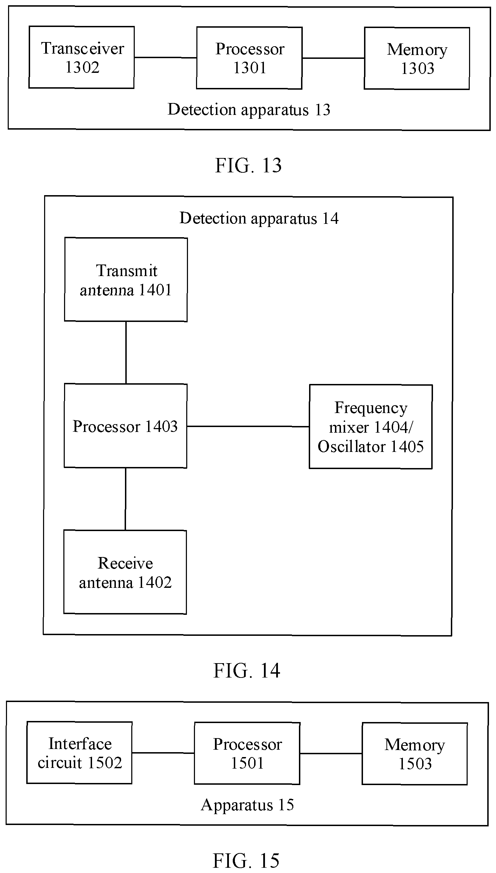

FIG. 13 is a schematic diagram of another possible structure of a detection apparatus according to an embodiment of this application. The detection apparatus 13 may include a processor 1301 and a transceiver 1302, and functions of the two may correspond respectively to specific functions of the processing module 1201 and the transceiver module 1202 shown in FIG. 12. Details are not described herein again. Optionally, the detection apparatus 13 may further include a memory 1303, configured to store program instructions and/or data for the processor 1301 to read. Certainly, the detection apparatus 13 may not include the memory 1303, and the memory 1303 may be located outside the detection apparatus 13.

FIG. 14 is a schematic diagram of still another possible structure of a detection apparatus according to an embodiment of this application. The detection apparatuses provided in FIG. 12 to FIG. 14 may implement a function of the detection apparatus in the embodiment shown in FIG. 6. The detection apparatuses provided in FIG. 12 to FIG. 14 may be a part or all of radar apparatuses in an actual communication scenario, or may be function modules integrated in a radar apparatus or located outside the radar apparatus, for example, may be chip systems, specifically based on implementing a corresponding function. The structures and compositions of the detection apparatuses are not specifically limited.

In this optional implementation, the detection apparatus 14 includes a transmit antenna 1401, a receive antenna 1402, and at least one processor 1403. Further optionally, the detection apparatus 14 further includes a frequency mixer 1404 and/or an oscillator 1405. Further optionally, the detection apparatus 14 may further include a low-pass filter, a directional coupler, and/or the like. The transmit antenna 1401 and the receive antenna 1402 are configured to support the detection apparatus 14 to perform radio communication, the transmit antenna 1401 supports transmission of a radar signal, and the receive antenna 1402 supports reception of a radar signal and/or reception of a reflected signal, to finally implement a detection function. The processor 1403 performs some possible determining and/or processing functions. Further, the processor 1403 controls operations of the transmit antenna 1401 and/or the receive antenna 1402. Specifically, the processor 1403 controls the transmit antenna 1401 to transmit a signal that needs to be transmitted, and a signal received through the receive antenna 1402 may be transmitted to the processor 1403 for corresponding processing. Components included in the detection apparatus 14 may be configured to cooperatively perform the method provided in the embodiment shown in FIG. 6. Optionally, the detection apparatus 14 may further include a memory, configured to store program instructions and/or data. The transmit antenna 1401 and the receive antenna 1402 may be disposed separately, or may be integrated as a transceiver antenna, to perform corresponding transmitting and receiving functions.

FIG. 15 is a schematic diagram of a structure of an apparatus 15 according to an embodiment of this application. The apparatus 15 shown in FIG. 15 may be a detection apparatus, or may be a chip or circuit capable of performing a function of the detection apparatus. For example, the chip or circuit may be disposed in a radar apparatus. The apparatus 15 shown in FIG. 15 may include at least one processor 1501 (for example, the processing module 1201 may be implemented by using the processor 1501, and the processor 1301 and the processor 1501 may be, for example, a same component) and an interface circuit 1502 (for example, the transceiver module 1202 may be implemented by using the interface circuit 1502, and the transceiver 1302 and the interface circuit 1502 are, for example, a same component). The processor 1501 may enable the apparatus 15 to implement the steps performed by the detection apparatus in the method provided in the embodiment shown in FIG. 6. Optionally, the apparatus 15 may further include a memory 1503, and the memory 1503 may be configured to store instructions. The processor 1501 executes the instructions stored in the memory 1503, to enable the apparatus 15 to implement the steps performed by the detection apparatus in the method provided in the embodiment shown in FIG. 6.

Further, the processor 1501, the interface circuit 1502, and the memory 1503 may communicate with each other through an internal connection channel, to transfer control signals and/or data signals. The memory 1503 is configured to store a computer program. The processor 1501 may invoke and run the computer program from the memory 1503, to control the interface circuit 1302 to receive a signal or send a signal, and complete the steps performed by the detection apparatus in the method provided in the embodiment shown in FIG. 6. The memory 1503 may be integrated into the processor 1501, or may be separated from the processor 1501.

Optionally, if the apparatus 15 is a device, the interface circuit 1502 may include a receiver and a transmitter. The receiver and the transmitter may be a same component or different components. When the receiver and the transmitter are a same component, the component may be referred to as a transceiver.

Optionally, if the apparatus 15 is a chip or a circuit, the interface circuit 1502 may include an input interface and an output interface. The input interface and the output interface may be a same interface, or may be different interfaces. Optionally, if the apparatus 15 is a chip or a circuit, the apparatus 15 may not include the memory 1503. The processor 1501 may read instructions (programs or code) in an external memory of the chip or the circuit, to implement the steps performed by the detection apparatus in the method provided in the embodiment shown in FIG. 6.

Optionally, if the apparatus 15 is a chip or a circuit, the apparatus 15 may include a resistor, a capacitor, or another corresponding functional unit, and the processor 1501 or the interface circuit 1502 may be implemented by using the corresponding functional unit.

In an implementation, a function of the interface circuit 1502 may be considered to be implemented by using a transceiver circuit or a transceiver-dedicated chip. It may be considered that the processor 1501 is implemented by using a dedicated processing chip, a processing circuit, a processor, or a general-purpose chip.

In another implementation, it may be considered that the detection apparatus provided in this embodiment of this application is implemented by using a general-purpose computer. To be specific, program code for implementing functions of the processor 1501 and the interface circuit 1502 is stored in the memory 1503, and the processor 1501 implements the functions of the processor 1501 and the interface circuit 1502 by executing the program code stored in the memory 1503.

Functions and actions of the modules or units in the apparatus 15 that are listed above are merely examples for description, and functional units in the apparatus 15 may be configured to perform actions or processing processes performed by the detection apparatus in the embodiment shown in FIG. 6. To avoid repetition, detailed descriptions are omitted herein.

In still another implementation, when the target apparatus or the detection apparatus is implemented by using software, the target apparatus or the detection apparatus may be completely or partially implemented in a form of a computer program product. The computer program product includes one or more computer instructions. When the computer program instructions are loaded and executed on the computer, the procedure or functions according to the embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It should be noted that the processor included in the target apparatus or the detection apparatus configured to perform the method provided in the embodiments of this application may be a central processing unit (central processing unit, CPU), a general-purpose processor, or a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various examples of logical blocks, modules, and circuits described with reference to the content disclosed in this application. Alternatively, the processor may be a combination implementing a computing function, for example, a combination of one or more microprocessors, or a combination of the DSP and a microprocessor.

Method or algorithm steps described in combination with the embodiments of this application may be implemented by hardware, or may be implemented by a processor by executing software instructions. The software instruction may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in the target apparatus or the detection apparatus. Certainly, the processor and the storage medium may alternatively exist in the target apparatus or the detection apparatus as discrete components.

It may be understood that FIG. 11 shows only a simplified design of the target apparatus. In an actual application, the target apparatus may include any quantity of transceivers, processors, controllers, memories, or other possible components.

Similarly, FIG. 12 to FIG. 15 show only simplified designs of the detection apparatus. In an actual application, the detection apparatus may include any quantity of transceivers, processors, controllers, memories, or other possible components.

An embodiment of this application further provides a distributed system, including at least one detection apparatus described above or at least one detection device that carries the detection apparatus described above.

An embodiment of this application further provides a terminal apparatus, including at least one detection apparatus described above and/or at least one target apparatus described above. Optionally, the terminal apparatus may be a transportation vehicle (including a slow transportation vehicle, for example, an unmanned transport vehicle), a drone, a road side unit RSU, a robot, or the like.

The foregoing description about the implementations allows a person skilled in the art to clearly understand that, for the purpose of convenient and brief description, division into only the foregoing function modules is used as an example for description. In an actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatuses and methods may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part of the technical solutions that contributes to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of the embodiments of this application, but are not intended to limit the protection scope of the embodiments of this application. Any variation or replacement within the technical scope disclosed in this application shall fall within the protection scope of the embodiments of this application. Therefore, the protection scope of the embodiments of this application shall be subject to the protection scope of the claims.

**Claims**

1. A signal processing method, comprising:

   receiving a first transmit signal from a detection apparatus; and
   generating a first echo signal, wherein the first echo signal is generated by modulating a proportion of reflected signals of the first transmit signal, and a first Doppler shift exists between the first echo signal and the first transmit signal, wherein
   the first echo signal is used to determine a distance between the detection apparatus and a target apparatus.

2. The method according to claim 1, wherein a difference between a second Doppler frequency corresponding to the first echo signal and the first Doppler shift is less than or equal to a first threshold, the first threshold corresponds to first information, the first information comprises preset speed information, and the second Doppler frequency corresponds to the distance between the detection apparatus and the target apparatus.

3. The method according to claim 1 or 2, wherein a speed of the target apparatus is within a first speed range, and the first speed range is preset.

4. The method according to any one of claims 1 to 3, wherein the generating a first echo signal comprises:

   changing impedance of an antenna of the target apparatus, to modulate amplitudes of the proportion of reflected signals of the first transmit signal; and
   obtaining the first echo signal.

5. The method according to any one of claims 1 to 4, wherein the first Doppler shift is determined based on a first speed, and the first speed is a movement speed of an object with a highest movement speed in an environment in which the target apparatus is located.

6. A signal processing method, comprising:

   sending a first transmit signal;
   receiving a first echo signal from a target apparatus, wherein the first echo signal is generated by modulating a proportion of reflected signals of the first transmit signal, and relative to the first transmit signal, the first echo signal corresponds to a second Doppler frequency; and
   determining a distance between a detection apparatus and the target apparatus based on the first echo signal.

7. The method according to claim 6, wherein a difference between the second Doppler frequency and a first Doppler shift corresponding to the first echo signal is less than or equal to a first threshold, the first threshold corresponds to first information, and the first information comprises preset speed information.

8. The method according to claim 6 or 7, wherein the determining a distance between a detection apparatus and the target apparatus based on the first echo signal comprises:

   determining a difference frequency signal corresponding to the first echo signal; and
   determining the distance between the detection apparatus and the target apparatus based on the difference frequency signal.

9. The method according to claim 8, wherein the determining the distance between the detection apparatus and the target apparatus based on the difference frequency signal comprises:

   inputting the difference frequency signal into a range-Doppler spectrum, wherein the range-Doppler spectrum is used to represent a relationship between a distance, a Doppler frequency, and signal energy; and
   determining that a distance corresponding to a signal in a first frequency range in the range-Doppler spectrum is the distance between the detection apparatus and the target apparatus, wherein the first frequency range is determined based on the first Doppler shift and the first threshold.

10. The method according to any one of claims 6 to 9, wherein the first Doppler shift is determined based on a first speed, and the first speed is a movement speed of an object with a highest movement speed in an environment in which the target apparatus is located.

11. A target apparatus, comprising:

a transceiver module, configured to receive a first transmit signal from a detection apparatus; and
a processing module, configured to generate a first echo signal, wherein the first echo signal is generated by modulating a proportion of reflected signals of the first transmit signal, and a first Doppler shift exists between the first echo signal and the first transmit signal; and
the first echo signal is used to determine a distance between the detection apparatus and the target apparatus.

12. The target apparatus according to claim 11, wherein a difference between a second Doppler frequency corresponding to the first echo signal and the first Doppler shift is less than or equal to a first threshold, the first threshold is determined based on first information, the first information comprises preset speed information, and the second Doppler frequency corresponds to the distance between the detection apparatus and the target apparatus.

13. The target apparatus according to claim 11 or 12, wherein a speed of the target apparatus is within a first speed range, and the first speed range is preset.

14. The target apparatus according to any one of claims 11 to 13, wherein the processing module is configured to generate the first echo signal in the following manner:

changing impedance of an antenna of the target apparatus, to modulate amplitudes of the proportion of the reflected signals of the first transmit signal; and
obtaining the first echo signal.

15. The target apparatus according to any one of claims 11 to 14, wherein the first Doppler shift is determined based on a first speed, and the first speed is a movement speed of an object with a highest movement speed in an environment in which the target apparatus is located.

16. A detection apparatus, comprising:

a transceiver module, configured to send a first transmit signal, wherein
the transceiver module is further configured to receive a first echo signal from a target apparatus, the first echo signal is generated by modulating a proportion of reflected signals of the first transmit signal, and relative to the first transmit signal, the first echo signal corresponds to a second Doppler frequency; and
a processing module, configured to determine a distance between the detection apparatus and the target apparatus based on the first echo signal.

17. The detection apparatus according to claim 16, wherein a difference between the second Doppler frequency and a first Doppler shift corresponding to the first echo signal is less than or equal to a first threshold, the first threshold corresponds to first information, and the first information comprises preset speed information.

18. The detection apparatus according to claim 16 or 17, wherein the processing module is configured to determine the distance between the detection apparatus and the target apparatus based on the first echo signal in the following manner:

determining a difference frequency signal corresponding to the first echo signal; and
determining the distance between the detection apparatus and the target apparatus based on the difference frequency signal.

19. The detection apparatus according to claim 18, wherein the processing module is configured to determine the distance between the detection apparatus and the target apparatus based on the difference frequency signal in the following manner:

inputting the difference frequency signal into a range-Doppler spectrum, wherein the range-Doppler spectrum is used to represent a relationship between a distance, a Doppler frequency, and signal energy; and
determining that a distance corresponding to a signal in a first frequency range in the range-Doppler spectrum is the distance between the detection apparatus and the target apparatus, wherein the first frequency range is determined based on the first Doppler shift and the first threshold.

20. The detection apparatus according to any one of claims 16 to 19, wherein the first Doppler shift is determined based on a first speed, and the first speed is a movement speed of an object with a highest movement speed in an environment in which the target apparatus is located.

21. A computer-readable storage medium, wherein the computer-readable storage medium stores a computer program, and when the computer program is run on a computer, the computer is enabled to perform the method according to any one of claims 1 to 5, or the computer is enabled to perform the method according to any one of claims 6 to 10.

22. A detection system, comprising the target apparatus according to any one of claims 11 to 15, and the detection apparatus according to any one of claims 16 to 20.

23. A chip, comprising at least one processor and an interface circuit, wherein the interface circuit is configured to provide signal sending or receiving for the at least one processor, to implement the method according to any one of claims 1 to 5.

24. A chip, comprising at least one processor and an interface circuit, wherein the interface circuit is configured to provide signal sending or receiving for the at least one processor, to implement the method according to any one of claims 6 to 10.

Reader-writer

Antenna

Computer control end

Tag

FIG. 1

FIG. 2

Radio wave

Target object

Reflected wave

Radar

FIG. 3

Target

| Transmit antenna | Directional coupler | FMCW | Oscillator |

Intermediate frequency signal

| Receive antenna | Frequency mixer | Processor | Controller |

FIG. 4

Fixture  Fixture  Fixture

Workbench

Testing device

FIG. 5

Target
apparatus

Detection
apparatus

S61: A first transmit signal

S62: Generate a first echo signal based on
the first transmit signal, where the first
echo signal is generated by modulating
some of reflected signals of the first
transmit signal, and a first Doppler shift
exists between the first echo signal and
the first transmit signal

S62: The first echo signal

S63: Determine a distance between the
target apparatus and the detection
apparatus based on the first echo signal

S64: Obtain at least two distances
between the target apparatus and the
detection apparatus

S65: Position the target apparatus based
on the at least two distances

FIG. 6

FIG. 7A

Z=Z1

Z=Z2

FIG. 7B

First transmit signal

Detection apparatus

Target apparatus

First echo signal

Switching manner of impedance of an antenna of the target apparatus

FIG. 8

Amplitude

Frequency

0     $fc\text{--}fm$     $fc$     $fc\text{+}fm$

FIG. 9

Range-Doppler spectrum

FIG. 10

Target apparatus 11

| Processing module 1101 | | Transceiver module 1102 |

FIG. 11

Detection apparatus 12

| Processing module 1201 | | Transceiver module 1202 |

FIG. 12

| Transceiver 1302 | Processor 1301 | Memory 1303 |

Detection apparatus 13

FIG. 13

Detection apparatus 14

| Transmit antenna 1401 |

| Processor 1403 | Frequency mixer 1404/ Oscillator 1405 |

| Receive antenna 1402 |

FIG. 14

| Interface circuit 1502 | Processor 1501 | Memory 1503 |

Apparatus 15

FIG. 15

<table>
<tr><td colspan="2" style="text-align:center"><strong>INTERNATIONAL SEARCH REPORT</strong></td><td colspan="2">International application No.<br><br><strong>PCT/CN2020/086873</strong></td></tr>
</table>

**A.    CLASSIFICATION OF SUBJECT MATTER**

G01S 13/08(2006.01)i;   G01S 13/06(2006.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT, CNKI, WPI, EPODOC: 雷达, 反射, 回波, 调制, 距离, 目标, 多普勒, 阻抗, 辨别, 信号, 波, 确定, 识别, 测距, 幅度, 角度, radar, reflect+, modulat+, distance, range, target, doppler

**C.    DOCUMENTS CONSIDERED TO BE RELEVANT**

| Category* | Citation of document, with indication, where appropriate, of the relevant passages | Relevant to claim No. |
|---|---|---|
| X | US 2012268308 A1 (KEYSTONE TECHNOLOGY SOLUTIONS, LLC.) 25 October 2012 (2012-10-25)<br>    description, paragraphs [0072]-[0079] | 1-24 |
| A | CN 108828535 A (NATIONAL UNIVERSITY OF DEFENSE TECHNOLOGY OF PLA.) 16 November 2018 (2018-11-16)<br>    entire document | 1-24 |
| A | CN 109507661 A (THE 10TH RESEARCH INSTITUTE OF CHINA ELECTRONICS TECHNOLOGY GROUP CORPORATION) 22 March 2019 (2019-03-22)<br>    entire document | 1-24 |
| A | CN 107894585 A (NATIONAL UNIVERSITY OF DEFENSE TECHNOLOGY OF PLA.) 10 April 2018 (2018-04-10)<br>    entire document | 1-24 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2021** | **26 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/086873**

| Patent document cited in search report | | | Publication date (day/month/year) | Patent family member(s) | | | Publication date (day/month/year) |
|---|---|---|---|---|---|---|---|
| US | 2012268308 | A1 | 25 October 2012 | US | 2016363662 | A1 | 15 December 2016 |
| | | | | US | 2019257937 | A1 | 22 August 2019 |
| CN | 108828535 | A | 16 November 2018 | None | | | |
| CN | 109507661 | A | 22 March 2019 | None | | | |
| CN | 107894585 | A | 10 April 2018 | None | | | |

Form PCT/ISA/210 (patent family annex) (January 2015)